(19) **Europäisches Patentamt / European Patent Office / Office européen des brevets**

(11) **EP 4 746 336 A1**

(12) **EUROPEAN PATENT APPLICATION**
published in accordance with Art. 153(4) EPC

(43) Date of publication:
20.05.2026 Bulletin 2026/21

(21) Application number: 24853693.0

(22) Date of filing: 09.08.2024

(51) International Patent Classification (IPC):
*H04L 5/14* (2006.01)  *H04B 1/713* (2011.01)

(52) Cooperative Patent Classification (CPC):
H04B 1/713; H04B 1/7136; H04L 5/14;
H04W 72/0453; H04W 72/1268; H04W 72/23

(86) International application number:
PCT/CN2024/111012

(87) International publication number:
WO 2025/036284 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.08.2023 CN 202311021897

(71) Applicant: Huawei Technologies Co., Ltd.
Shenzhen, Guangdong 518129 (CN)

(72) Inventors:
• LU, Shaozhong
  Shenzhen, Guangdong 518129 (CN)
• GUO, Zhiheng
  Shenzhen, Guangdong 518129 (CN)
• SONG, Xinghua
  Shenzhen, Guangdong 518129 (CN)
• HOU, Hailong
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **COMMUNICATION METHOD AND COMMUNICATION APPARATUS**

(57) This application provides a communication method and a communication apparatus. The method includes: receiving first information, where the first information includes a first bit part, a second bit part, and a third bit part, where the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits included in the first bit part, the second bit part, and the third bit part is less than or equal to a first threshold; and based on the first information, sending a first PUSCH in an SBFD time unit in a frequency hopping manner on the first frequency resource and the second frequency resource, and sending the first PUSCH in a non-SBFD time unit in a frequency hopping manner on the third frequency resource and the fourth frequency resource. Therefore, flexibility of frequency hopping can be improved, and bit consumption for indication can be reduced.

Terminal device — Network device

- - - S630: Second information - - - →

← S610: First information

S620: Send a first physical uplink shared channel PUSCH in a subband full duplex SBFD time unit in a frequency hopping manner on a first frequency resource and a second frequency resource, and send the first PUSCH in a non-SBFD time unit in a frequency hopping manner on a third frequency resource and a fourth frequency resource

FIG. 6

## Description

This application claims priority to Chinese Patent Application No. 202311021897.1, filed with the China National Intellectual Property Administration on August 11, 2023 and entitled "COMMUNICATION METHOD AND COMMUNICATION APPARATUS", which is incorporated herein by reference in its entirety.

## TECHNICAL FIELD

This application relates to the field of communication technologies, and more specifically, to a communication method and a communication apparatus.

## BACKGROUND

To obtain a frequency diversity gain of a communication system and improve uplink transmission performance, a terminal device may send data in a frequency hopping manner. In other words, the terminal device may map to-be-sent data to different frequency resources at different moments, where a time domain resource position and a frequency resource position to which the to-be-sent data is mapped may be referred to as a frequency hopping pattern. The terminal device may obtain the frequency hopping pattern from a network device, and send the data in a frequency hopping manner based on the frequency hopping pattern.

However, in a communication system using a subband full duplex (subband non-overlapping full duplex, SBFD) transmission mode, a frequency resource in a slot or an orthogonal frequency division multiplexing (orthogonal frequency division multiplexing, OFDM) symbol is divided into an uplink subband used for uplink transmission and a downlink subband used for downlink transmission, so that frequency ranges that can be used for uplink transmission at different moments may be different.

How to indicate frequency hopping patterns in this scenario is a technical problem that urgently needs to be resolved.

## SUMMARY

This application provides a communication method and a communication apparatus, to improve flexibility of frequency hopping and reduce bit consumption for indicating frequency hopping patterns.

According to a first aspect, a communication method is provided. The method may be implemented by a terminal device or a chip in the terminal device. The method includes: receiving first information, where the first information includes a first bit part, a second bit part, and a third bit part, where the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits included in the first bit part, the second bit part, and the third bit part is less than or equal to a first threshold; and based on the first information, sending a first physical uplink shared channel PUSCH in a subband full duplex SBFD time unit in a frequency hopping manner on the first frequency resource and the second frequency resource, and sending the first PUSCH in a non-SBFD time unit in a frequency hopping manner on the third frequency resource and the fourth frequency resource.

According to this technical solution, the terminal device may determine a resource position of the first frequency resource based on the first bit part, and determine a resource position of the second frequency resource based on the first bit part and the second bit part, to determine a frequency hopping pattern in the SBFD time unit. The terminal device may determine a resource position of the third frequency resource based on the first frequency resource, and determine a resource position of the fourth frequency resource based on the resource position of the third frequency resource and the third bit part, to determine a frequency hopping pattern in the non-SBFD time unit. In other words, a network device may use a limited number of bits to indicate two frequency hopping patterns, and a frequency spacing for frequency hopping in the SBFD time unit and a frequency spacing for frequency hopping in the non-SBFD time unit may be flexibly indicated by using the second bit part and the third bit part respectively. This can improve flexibility of frequency hopping, and can reduce bit consumption for indicating the frequency hopping patterns.

According to a second aspect, a communication method is provided. The method may be implemented by a network device or a chip in the network device. The method includes: sending first information, where the first information includes a first bit part, a second bit part, and a third bit part, where the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits included in the first bit part, the second bit part, and the third bit part is less than or equal to a first threshold; and receiving a first physical uplink shared channel PUSCH in a subband full duplex SBFD time unit in a frequency hopping manner on the first frequency resource and the second frequency resource, and receiving the first PUSCH in a non-SBFD time unit in a frequency hopping manner on the third frequency resource and the fourth frequency resource.

For beneficial technical effects of the second aspect, refer to descriptions of related implementations of the first aspect. Details are not described again.

With reference to the first aspect or the second aspect, in some implementations of the first aspect or the second aspect, the first threshold is determined based on a number of frequency units in an uplink bandwidth part BWP, and the third frequency resource and the fourth frequency resource are frequency resources in the uplink BWP.

According to this technical solution, for determining the first threshold, refer to the number of frequency units in the uplink BWP. For example, the network device may determine the first threshold based on the number of frequency units in the uplink BWP.

With reference to the first aspect or the second aspect, in some implementations of the first aspect or the second aspect, the first threshold L satisfies:

$$L = \lceil log_2(N^{UL,BWP}(N^{UL,BWP} + 1)/2) \rceil.$$

$N^{UL,BWP}$ represents the number of frequency units in the uplink BWP, $\lceil \rceil$ represents rounding up, and the third frequency resource and the fourth frequency resource are frequency resources in the uplink BWP.

According to this technical solution, the network device uses L bits or fewer bits to indicate frequency positions of the first frequency resource and the second frequency resource in an uplink subband, resource positions of the third frequency resource and the fourth frequency resource in the uplink BWP, the first frequency spacing, and the second frequency spacing. Currently, the network device usually uses L bits obtained according to the foregoing formula to indicate the frequency units in the uplink BWP, or the frequency units in the uplink BWP and one frequency spacing. If the network device needs to indicate two or more frequency spacings used for frequency hopping, more than L bits need to be used for indication. In this technical solution, the network device uses L bits or fewer bits to indicate at least two frequency spacings used for frequency hopping, so that flexibility of frequency hopping can be improved, and bit consumption for indicating the frequency hopping patterns can be reduced.

With reference to the first aspect or the second aspect, in some implementations of the first aspect or the second aspect, the first information further includes a fourth bit part, and the fourth bit part indicates a third frequency spacing between the first frequency resource and the third frequency resource.

According to this technical solution, the third frequency spacing between the first frequency resource and the third frequency resource may be further indicated by using a separate fourth bit part, to further improve flexibility of frequency hopping.

For example, a start position of the first frequency resource is the same as a start position of the third frequency resource.

According to this technical solution, the terminal device may determine the start position of the third frequency resource based on the start position of the first frequency resource. In other words, the terminal device may determine the start positions of the first frequency resource and the third frequency resource based on the first bit part, so that bit consumption can be reduced.

With reference to the first aspect or the second aspect, in some implementations of the first aspect or the second aspect, a sum of numbers of bits included in the first bit part, the second bit part, the third bit part, and the fourth bit part is less than or equal to the first threshold.

According to this technical solution, the network device may use a limited number of bits to indicate two frequency hopping patterns. A first frequency position may be indicated by using the first bit part, a third frequency position may be indicated by using the fourth bit part, and a frequency spacing for frequency hopping in the SBFD time unit and a frequency spacing for frequency hopping in the non-SBFD time unit may be indicated by using the second bit part and the third bit part respectively. This can improve flexibility of frequency hopping, and can reduce bit consumption for indicating the frequency hopping patterns.

With reference to the first aspect or the second aspect, in some implementations of the first aspect or the second aspect, a sum of the number of bits included in the first bit part and the number of bits included in the second bit part is determined based on a number of frequency units in an uplink subband, and the first frequency resource and the second frequency resource are frequency resources in the uplink subband.

According to this technical solution, the first bit part indicates the first frequency resource, the first frequency resource is a frequency resource in the uplink subband, and the uplink subband is a frequency resource in the uplink BWP. The network device may determine the number of bits included in the first bit part based on the number of frequency units in the uplink subband, rather than the number of frequency units in the uplink BWP, so that the number of bits in the first bit part can be less than the first threshold.

With reference to the first aspect or the second aspect, in some implementations of the first aspect or the second aspect, the sum of the number $N_1$ of bits included in the first bit part and the number $N_2$ of bits included in the second bit part satisfies:

$$N_1 + N_2 = \lceil log_2(N^{UL,subband}(N^{UL,subband} + 1)/2) \rceil.$$

$N^{UL,subband}$ represents the number of frequency units in the uplink subband, $\lceil \rceil$ represents rounding up, and the first frequency resource and the second frequency resource are frequency resources in the uplink subband.

According to this technical solution, the $N_1$ bits determined according to the foregoing formula can indicate at least one frequency unit in the uplink subband, and the network device can use the $N_1$ bits to indicate a resource position of the first frequency resource. Currently, the network device usually uses a number of bits determined based on the number of frequency units in the uplink BWP to indicate a resource position, and the number of frequency units in the uplink BWP is greater than the number of frequency units in the uplink subband. In other words, the network device currently uses more than $N_1$ bits to indicate the resource position. In this technical solution, the first frequency resource may be indicated by using a small number of bits, so that bit consumption can be reduced.

With reference to the first aspect or the second aspect, in some implementations of the first aspect or the second aspect, the first bit part indicates a start frequency unit in the first frequency resource and a number of frequency units in the first frequency resource.

For example, the first bit part represents a resource indication value RIV.

According to this technical solution, the first bit part can indicate the start frequency unit in the first frequency resource and the number of frequency units in the first frequency resource, so that the terminal device can determine a resource position of the first frequency resource based on the first bit part.

With reference to the first aspect or the second aspect, in some implementations of the first aspect or the second aspect, the first frequency resource, the second frequency resource, the third frequency resource, and the fourth frequency resource have a same number of frequency units.

According to this technical solution, the first frequency resource, the second frequency resource, the third frequency resource, and the fourth frequency resource have the same number of frequency units, and a simple design manner for a frequency hopping pattern is provided.

With reference to the first aspect, in some implementations of the first aspect, the method further includes: sending second information, where the second information is used for determining that the terminal device can support at least one of the following capabilities: supporting the first information including the second bit part; supporting the first information including the third bit part; supporting the first information including the fourth bit part, where the fourth bit part indicates the third frequency spacing between the first frequency resource and the third frequency resource; supporting the first information including the second bit part and the third bit part; supporting the first information including the second bit part, the third bit part, and the fourth bit part; and supporting determining the number of bits included in the first bit part based on the number of frequency units in the uplink subband.

With reference to the second aspect, in some implementations of the second aspect, the method further includes: receiving second information, where the second information is used for determining that the terminal device can support at least one of the following capabilities: supporting the first information including the second bit part; supporting the first information including the third bit part; supporting the first information including the fourth bit part, where the fourth bit part indicates the third frequency spacing between the first frequency resource and the third frequency resource; supporting the first information including the second bit part and the third bit part; supporting the first information including the second bit part, the third bit part, and the fourth bit part; and supporting determining the number of bits included in the first bit part based on the number of frequency units in the uplink subband.

According to this technical solution, the terminal device may further report, to the network device, a capability of parsing the first information, so that the network device can send the first information to the terminal device based on the reported capability, thereby improving communication reliability.

For example, a start position of the second frequency resource satisfies the following condition:

$$RB_{start1}(1) = (RB_{start1} + RB_{offset1})mod N_{UL\,Subband}^{size}.$$

$RB_{start1}(1)$ represents an index of a start frequency unit in the second frequency resource with reference to the uplink subband, $RB_{start1}$ represents an index of the start frequency unit in the first frequency resource with reference to the uplink subband, $RB_{offset1}$ represents the first frequency spacing, and $N_{UL\,Subband}^{size}$ represents the number of frequency units included in the uplink subband.

For example, a start position of the second frequency resource satisfies the following condition:

$$RB_{start1}(1) = \left(RB_{start1} + RB_{offset1} - RB_{start}^{UL,subband}\right)\bmod N_{UL\ Subband}^{size} + RB_{start}^{UL,subband}.$$

$RB_{start1}(1)$ represents an index of a start frequency unit in the second frequency resource with reference to the uplink BWP, $RB_{start1}$ represents an index of the start frequency unit in the first frequency resource with reference to the uplink BWP, $RB_{offset1}$ is used for determining the first frequency spacing, $RB_{start}^{UL,subband}$ represents an index of a start frequency unit in the uplink subband with reference to the BWP, and $N_{UL\ Subband}^{size}$ represents the number of frequency units included in the uplink subband.

For example, a start position of the second frequency resource satisfies the following condition:

$$RB_{start1}(n_s^\mu) = (RB_{start1} + RB_{offset1})\bmod N_{UL\ Subband}^{size}.$$

$n_s^\mu$ represents a slot index of a current slot in a system frame, the current slot is an SBFD slot occupied by multi-slot PUSCH transmission, $n_s^\mu \bmod 2 = 1$, $RB_{start1}(n_s^\mu)$ represents an index of a start frequency unit in the second frequency resource with reference to the uplink subband, $RB_{start1}$ represents an index of the start frequency unit in the first frequency resource with reference to the uplink subband, $RB_{offset1}$ represents the first frequency spacing, and $N_{UL\ Subband}^{size}$ represents the number of frequency units included in the uplink subband.

For example, a start position of the second frequency resource satisfies the following condition:

$$RB_{start1}(n_s^\mu) = \left(RB_{start1} + RB_{offset1} - RB_{start}^{UL,subband}\right)\bmod N_{UL\ Subband}^{size} + RB_{start}^{UL,subband}.$$

$n_s^\mu$ represents a slot index of a current slot in a system frame, the current slot is an SBFD slot occupied by multi-slot PUSCH transmission, $n_s^\mu \bmod 2 = 1$, $RB_{start1}(n_s^\mu)$ represents an index of a start frequency unit in the second frequency resource with reference to the uplink BWP, $RB_{start1}$ represents an index of the start frequency unit in the first frequency resource with reference to the uplink BWP, $RB_{offset1}$ represents the first frequency spacing, $RB_{start}^{UL,subband}$ represents an index of a start frequency unit in the uplink subband with reference to the BWP, and $N_{UL\ Subband}^{size}$ represents the number of frequency units included in the uplink subband.

For example, a start position of the second frequency resource satisfies the following condition:

$$RB_{start1}(n_{s,f}^\mu) = (RB_{start1} + RB_{offset})\bmod N_{UL\ Subband}^{size}.$$

$n_{s,f}^\mu$ represents a slot index of a current slot in a system frame, the current slot is an SBFD slot occupied by multi-slot PUSCH transmission, $\left\lfloor \frac{n_{s,f}^\mu + n_f \cdot N_{slot}^{frame,\mu}}{N_{FH}} \right\rfloor \bmod 2 = 1$, $RB_{start1}(n_{s,f}^\mu)$ represents an index of a start frequency unit in the second frequency resource with reference to the uplink subband, $n_f$ represents an index of the system frame including the current slot, $N_{slot}^{frame,\mu}$ represents a number of slots included in the system frame, $N_{FH}$ represents a first parameter, the first parameter indicates to use the first frequency resource or the second frequency resource in $N_{FN}$ consecutive slots, $RB_{start1}$ represents an index of the start frequency unit in the first frequency resource with reference to the uplink subband, $RB_{offset1}$ represents the first frequency spacing, and $N_{UL\ Subband}^{size}$ represents the number of frequency units included in the uplink subband.

For example, a start position of the second frequency resource satisfies the following condition:

$$RB_{start}(n_{s,f}^\mu) = \left(RB_{start1} + RB_{offset1} - RB_{start}^{UL,subband}\right)\bmod N_{UL\ Subband}^{size} + RB_{start}^{UL,subband}.$$

$n_{s,f}^\mu$ represents a slot index of a current slot in a system frame, the current slot is an SBFD slot occupied by multi-slot PUSCH transmission, $\left\lfloor \frac{n_{s,f}^\mu + n_f \cdot N_{slot}^{frame,\mu}}{N_{FH}} \right\rfloor \bmod 2 = 1$, $RB_{start1}(n_s^\mu)$ represents an index of a start frequency unit in the second frequency resource with reference to the BWP, $n_f$ represents an index of the system frame including the current slot, $N_{slot}^{frame,\mu}$ represents a number of slots included in the system frame, $N_{FH}$ represents a first parameter, the first parameter indicates to use the first frequency resource or the second frequency resource in $N_{FN}$ consecutive slots, $RB_{start1}$ represents an index of the start frequency unit in the first frequency resource with reference to the uplink BWP, $RB_{offset1}$ represents the first frequency spacing, $RB_{start}^{UL,subband}$ represents an index of a start frequency unit in the uplink subband with reference to the BWP, and $N_{UL\,Subband}^{size}$ represents the number of frequency units included in the uplink subband.

For example, a start position of the second frequency resource satisfies the following condition:

$$RB_{start1}(n) = (RB_{start1} + RB_{offset1}) \bmod N_{UL\,Subband}^{size}.$$

n represents an actual repetition in an $n^{th}$ nominal repetition, nmod2 = 1, $RB_{start1}(n)$ represents an index of a start frequency unit in the second frequency resource with reference to the uplink subband, $RB_{start1}$ represents an index of the start frequency unit in the first frequency resource with reference to the uplink subband, $RB_{offset1}$ represents the first frequency spacing, and $N_{UL\,Subband}^{size}$ represents the number of frequency units included in the uplink subband.

For example, a start position of the second frequency resource satisfies the following condition:

$$RB_{start1}(n) = \left(RB_{start1} + RB_{offset} - RB_{start}^{UL,subband}\right) \bmod N_{UL\,Subband}^{size} + RB_{start}^{UL,subband}.$$

n represents an actual repetition in an $n^{th}$ nominal repetition, nmod2 = 1, $RB_{start1}(n)$ represents an index of a start frequency unit in the second frequency resource with reference to the BWP, $RB_{start1}$ represents an index of the start frequency unit in the first frequency resource with reference to the uplink BWP, $RB_{offset1}$ represents the first frequency spacing, $RB_{start}^{UL,subband}$ represents an index of a start frequency unit in the uplink subband with reference to the BWP, and $N_{UL\,Subband}^{size}$ represents the number of frequency units included in the uplink subband.

According to a third aspect, a communication apparatus is provided. The communication apparatus includes a transceiver unit and a processing unit. The transceiver unit is configured to receive first information, where the first information includes a first bit part, a second bit part, and a third bit part, where the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits included in the first bit part, the second bit part, and the third bit part is less than or equal to a first threshold; and the processing unit is configured to, based on the first information, send a first physical uplink shared channel PUSCH in a subband full duplex SBFD time unit in a frequency hopping manner on the first frequency resource and the second frequency resource, and send the first PUSCH in a non-SBFD time unit in a frequency hopping manner using the third frequency resource and the fourth frequency resource.

For implementations of the third aspect and beneficial technical effects, refer to descriptions of related implementations of the first aspect. Details are not described again.

According to a fourth aspect, a communication apparatus is provided. The communication apparatus includes a transceiver unit and a processing unit. The transceiver unit is configured to send first information, where the first information includes a first bit part, a second bit part, and a third bit part, where the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits included in the first bit part, the second bit part, and the third bit part is less than or equal to a first threshold; and the processing unit is configured to, based on the first information, receive a first physical uplink shared channel PUSCH in a subband full duplex SBFD time unit in a frequency hopping manner using the first frequency resource and the second frequency resource, and receive the first PUSCH in a non-SBFD time unit in a frequency hopping manner on the third frequency resource and the fourth frequency resource.

For implementations of the fourth aspect and beneficial technical effects, refer to descriptions of related implementations of the first aspect. Details are not described again.

According to a fifth aspect, a communication apparatus is provided. The communication apparatus has functions of implementing the method according to any one of the first aspect or the possible implementations of the first aspect. The functions may be implemented by hardware, or may be implemented by hardware executing corresponding software. The hardware or the software includes one or more units or modules corresponding to the functions.

According to a sixth aspect, a communication apparatus is provided. The communication apparatus has functions of implementing the method according to any one of the second aspect or the possible implementations of the second aspect. The functions may be implemented by hardware, or may be implemented by hardware executing corresponding software. The hardware or the software includes one or more units or modules corresponding to the functions.

According to a seventh aspect, a communication apparatus is provided. The apparatus includes a processor and a memory. Optionally, the communication apparatus may further include a transceiver. The memory is configured to store a computer program. The processor is configured to: invoke and run the computer program stored in the memory, and control the transceiver to send and receive a signal, to cause the communication apparatus to perform the method according to any one of the first aspect or the possible implementations of the first aspect.

For example, the communication apparatus is a terminal device or a chip used in the terminal device.

According to an eighth aspect, a communication apparatus is provided. The apparatus includes a processor and a memory. Optionally, the communication apparatus may further include a transceiver. The memory is configured to store a computer program. The processor is configured to: invoke and run the computer program stored in the memory, and control the transceiver to send and receive a signal, to cause the communication apparatus to perform the method according to any one of the second aspect or the possible implementations of the second aspect.

For example, the communication apparatus is a network device or a chip used in the network device.

According to a ninth aspect, a communication apparatus is provided. The apparatus includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to perform the method according to any one of the first aspect or the possible implementations of the first aspect.

For example, the communication apparatus is a terminal device or a chip used in the terminal device.

According to a tenth aspect, a communication apparatus is provided. The apparatus includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to perform the method according to any one of the second aspect or the possible implementations of the second aspect.

For example, the communication apparatus is a network device or a chip used in the network device.

According to an eleventh aspect, a computer-readable storage medium is provided. The computer-readable storage medium stores computer instructions, and when the computer instructions are run on a computer, the method according to any one of the first aspect and the second aspect or the possible implementations of the first aspect and the second aspect is performed.

According to a twelfth aspect, a computer program product is provided. The computer program product includes computer program code, and when the computer program code is run on a computer, the method according to any one of the first aspect and the second aspect or the possible implementations of the first aspect and the second aspect is performed.

According to a thirteenth aspect, a communication system is provided. The system includes the communication apparatus according to the third aspect and the communication apparatus according to the fourth aspect.

According to a fourteenth aspect, a communication system is provided. The system includes the communication apparatus according to any one or more of the third aspect to the twelfth aspect, or the communication apparatus according to any one of the possible implementations of any one of the third aspect to the twelfth aspect.

## BRIEF DESCRIPTION OF DRAWINGS

FIG. 1 is a diagram of a structure of a possible communication system to which an embodiment of this application is applicable;

FIG. 2 is a diagram of resource positions of an SBFD symbol and a non-SBFD symbol;

FIG. 3 is a first diagram of a resource structure using an SBFD transmission mode;

FIG. 4 is a second diagram of a resource structure using an SBFD transmission mode;

FIG. 5 is a third diagram of a resource structure using an SBFD transmission mode;

FIG. 6 is a schematic flowchart of a communication method according to an embodiment of this application;

FIG. 7 is a diagram of a frequency hopping pattern according to an embodiment of this application;

FIG. 8 is a diagram of another frequency hopping pattern according to an embodiment of this application; and

FIG. 9 to FIG. 11 are diagrams of structures of possible communication apparatuses according to embodiments of this application.

## DESCRIPTION OF EMBODIMENTS

The following describes technical solutions in embodiments of this application with reference to accompanying drawings.

The technical solutions in embodiments of this application may be applied to various communication systems, for example, 5th generation (5th generation, 5G), new radio (new radio, NR), long term evolution (long term evolution, LTE), internet of things (internet of things, IoT), wireless fidelity (wireless fidelity, Wi-Fi), 3rd generation partnership project (3rd generation partnership project, 3GPP)-related wireless communication, or other wireless communication that may occur in the future.

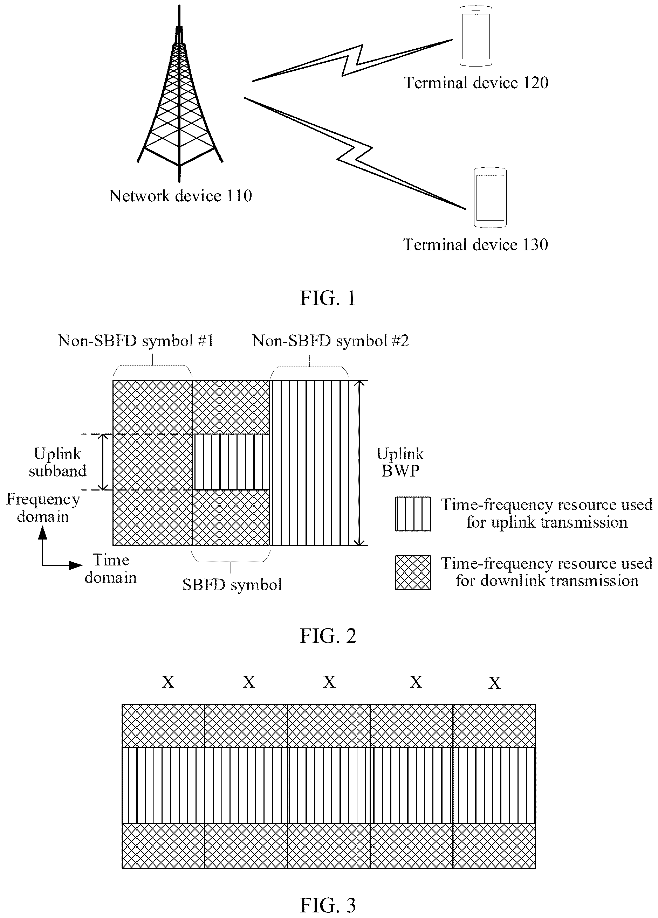

FIG. 1 is a diagram of a communication system according to an embodiment of this application. The communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 via a radio link to exchange information. It may be understood that the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technology, RAT), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central unit, CU), one or more distributed units (distributed unit, DU), or one or more CUs and one or more DUs. For example, functions of the CU may be implemented by one entity or different entities. For example, the functions of the CU are further divided. To be specific, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of radio resource control (radio resource control, RRC) and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application. For another example, in a vehicle-to-everything (vehicle-to-everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, an apparatus configured to implement a function of the network device may be a network device, or may be an apparatus that supports the network device in implementing the function, for example, a chip system or a combined component or part that can implement a function of the access network device. The apparatus may be installed in the network device. In this embodiment of this application, the chip system may include a chip, or may include a chip and another discrete component.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine type communication (machine-to-machine/machine type communication, M2M/MTC), internet of things, virtual reality (virtual reality, VR), augmented reality (augmented reality, AR), industrial control (industrial control), self driving (self driving), telemedicine (remote medical), smart grids (smart grid), smart furniture, smart offices, smart wearables, smart transportation, smart cities (smart city), uncrewed aerial vehicles, and robots. For example, the terminal device may be a handheld terminal in the cellular communication, a communication device in the D2D, an internet of things device in the MTC, a surveillance camera in the smart transportation and the smart city, a communication device in the uncrewed aerial vehicle, or the like. The terminal device may sometimes be referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be the terminal device, or may be an apparatus that supports the terminal device in implementing the function, for example, a chip system or a combined component or part that can implement a function of the terminal device. The apparatus may be installed in the terminal device.

For ease of understanding of embodiments of this application, concepts and related procedures in this application are described first.

1. Subband full duplex (subband non-overlapping full duplex, SBFD) scheme

FIG. 2 is a diagram of a resource structure of an SBFD scheme. In the SBFD scheme, one carrier or one bandwidth part (bandwidth part, BWP) is divided into a plurality of subbands, and transmission directions of different subbands may be different. To be specific, one BWP may include a first subband and a second subband, and transmission directions of the first subband and the second subband are different. For example, the first subband is an uplink frequency resource for sending a signal by a terminal device to a network device, and the second subband is a downlink transmission frequency resource for sending a signal by the network device to the terminal device.

It may be understood that the first subband and the second subband are two types of subbands with different transmission directions, and do not mean that one BWP includes only two subbands. For example, one BWP includes a subband #1 and a subband #2, and transmission directions of the subband #1 and the subband #2 are different. Alternatively, one carrier includes a subband #1, a subband #2, and a subband #3, transmission directions of the subband #1 and the subband #3 are the same, and transmission directions of the subband #1 and the subband #2 are different. In embodiments of this application, a BWP used for uplink transmission is referred to as an uplink BWP, a BWP used for downlink transmission is referred to as a downlink BWP, a subband used for uplink transmission is referred to as an uplink subband, and a subband used for downlink transmission is referred to as a downlink subband.

2. Uplink symbol, downlink symbol, flexible symbol, and SBFD symbol

A frequency resource in the uplink symbol is used for uplink transmission, a frequency resource in the downlink symbol is used for downlink transmission, and a frequency resource in the flexible symbol may be used for uplink transmission or downlink transmission, that is, a transmission direction of the flexible symbol may be determined based on control signaling. A frequency resource in the SBFD symbol includes an uplink subband and a downlink subband. In embodiments of this application, for ease of description, the uplink symbol, the downlink symbol, and the flexible symbol are collectively referred to as non-SBFD symbols. For example, FIG. 2 shows resource positions of one SBFD symbol and two non-SBFD symbols in time domain and in frequency domain. A frequency resource in the SBFD symbol includes an uplink subband and a downlink subband. A non-SBFD symbol #1 may be a downlink symbol or a flexible symbol. A non-SBFD symbol #2 may be an uplink symbol or a flexible symbol.

3. SBFD time unit and non-SBFD time unit

In embodiments of this application, when a time unit is a symbol, the SBFD time unit is an SBFD symbol, and the non-SBFD time unit is a non-SBFD symbol. When a time unit is a slot, a subframe, a half-frame, a frame, a mini-subframe, a mini-slot, or a transmission occasion (transmission occasion, TO), the SBFD time unit may be a time unit including an SBFD symbol, and the non-SBFD time unit may be a time unit that does not include an SBFD symbol. It may be understood that the time unit is not particularly limited in this application. For example, the time unit may alternatively be a time unit defined in the future. For ease of description, in embodiments of this application, an example in which the time unit is the slot is mainly used for description.

A resource structure is not particularly limited in this application. For ease of understanding of embodiments of this application, the following describes three possible resource structures with reference to FIG. 3 to FIG. 5. D represents a downlink slot, and the downlink slot includes a downlink symbol. U represents an uplink slot, and the uplink slot includes an uplink symbol. X represents an SBFD slot, and the SBFD slot may be formed by dividing a frequency resource in one downlink slot or specific slot (a slot including at least one flexible symbol). For example, the frequency resource in one downlink slot may be divided into one or more downlink subbands and one or more uplink subbands. The subband is a part of frequency bands in a bandwidth part (bandwidth part, BWP), that is, one or more consecutive physical resource blocks (physical resource block, PRB) in frequency domain. In embodiments of this application, the subband may be understood as the frequency resource.

FIG. 3 is a first diagram of a resource structure using an SBFD transmission mode. As shown in FIG. 3, a resource includes five SBFD slots. Frequency resources in the five SBFD slots include uplink subbands, and the uplink subband supports uplink transmission. The resource structure shown in FIG. 3 may be simplified as XXXXX.

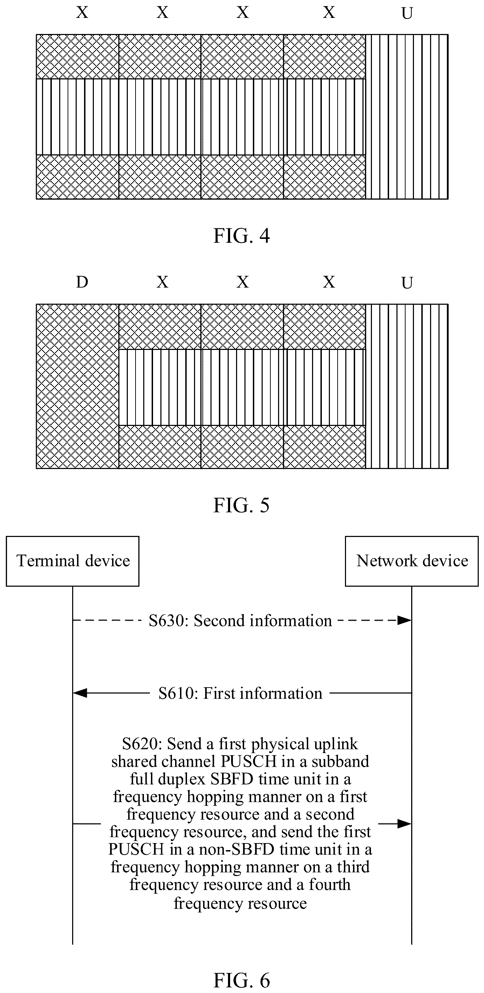

FIG. 4 is a second diagram of a resource structure using an SBFD transmission mode. As shown in FIG. 4, a resource includes four SFBD slots and one uplink slot. Frequency resources in the four SBFD slots include uplink subbands, and the uplink subband may be used for uplink transmission. A frequency resource in the uplink slot is an uplink BWP, and the uplink BWP may be used for uplink transmission. The resource structure shown in FIG. 4 may be simplified as XXXXU.

FIG. 5 is a third diagram of a resource structure using an SBFD transmission mode. As shown in FIG. 5, a resource includes one downlink slot, three SFBD slots, and one uplink slot. A frequency resource in the downlink slot is a downlink BWP. Frequency resources in the three SBFD slots include uplink subbands, and the uplink subband may be used for uplink transmission. A frequency resource in the uplink slot is an uplink BWP, and the uplink BWP is used for uplink transmission. The resource structure shown in FIG. 5 may be simplified as DXXXU.

4. Frequency hopping (frequency hopping, FH)

A change in a frequency position to which to-be-sent data is mapped is referred to as frequency hopping. Generally, when frequency hopping is enabled, the frequency position to which the to-be-sent data is mapped varies at different moments. Frequency positions of the to-be-sent data in different slots may be different. Frequency hopping may be used to obtain a frequency diversity gain of a communication system, and improve uplink transmission performance.

5. Frequency hopping pattern (frequency hopping pattern)

When frequency hopping is enabled, a set that includes frequency positions corresponding to different moments and that is determined by a terminal device may be referred to as a frequency hopping pattern. The terminal device may transmit an uplink signal based on the frequency hopping pattern, and the frequency hopping pattern is used for determining one or both of a time domain resource unit (for example, a symbol) and a frequency resource unit (for example, a subcarrier) that correspond to uplink transmission. The terminal device maps the uplink signal to a corresponding time domain resource unit and/or frequency resource unit for sending. In the frequency hopping pattern, different time domain resource units may correspond to different frequency resource units.

FIG. 6 is a schematic flowchart of a communication method according to an embodiment of this application.

S610: A network device sends first information to a terminal device. Correspondingly, the terminal device receives the first information from the network device.

The first information includes a first bit part, a second bit part, and a third bit part. The first bit part indicates a first frequency resource. The second bit part indicates a first frequency spacing between the first frequency resource and a second frequency resource. The third bit part indicates a second frequency spacing between a third frequency resource and a fourth frequency resource. The third frequency resource is determined based on the first frequency resource. A sum of numbers of bits included in the first bit part, the second bit part, and the third bit part is less than or equal to a first threshold. The first frequency resource and the second frequency resource are frequency resources of a first physical uplink shared channel (physical uplink shared channel, PUSCH) in an SBFD time unit, and the third frequency resource and the fourth frequency resource are frequency resources of the first PUSCH in a non-SBFD time unit. The terminal device may determine a resource position of the first frequency resource based on the first bit part, and determine a resource position of the second frequency resource based on the first bit part and the second bit part, to determine a frequency hopping pattern in the SBFD time unit. The terminal device may determine a resource position of the third frequency resource based on the first frequency resource, and determine a frequency hopping pattern in the non-SBFD time unit based on the resource position of the third frequency resource and the third bit part. In other words, the network device may use a limited number of bits to indicate two frequency hopping patterns, and a frequency spacing for frequency hopping in the SBFD time unit and a frequency spacing for frequency hopping in the non-SBFD time unit may be indicated by using the second bit part and the third bit part respectively. This provides a manner of flexibly indicating the frequency hopping patterns.

For detailed descriptions of the SBFD time unit and the non-SBFD time unit, refer to the foregoing descriptions. Details are not described herein again. The first frequency resource and the second frequency resource are a part of frequency resources in the SBFD time unit. The frequency resources in the SBFD time unit include a frequency resource used for uplink transmission and a frequency resource used for downlink transmission. For ease of description, in this embodiment of this application, the frequency resource used for uplink transmission is referred to as an uplink subband. For example, the first frequency resource and the second frequency resource are frequency resources in the uplink subband. The third frequency resource and the fourth frequency resource are a part of frequency resources in the non-SBFD time unit. For example, if the non-SBFD time unit is an uplink time unit, and a frequency resource in the uplink time unit is an uplink BWP, the third frequency resource and the fourth frequency resource may be frequency resources in the uplink BWP.

The terminal device may determine the third frequency resource based on the first frequency resource.

In a first possible implementation, a start position of the first frequency resource is the same as a start position of the third frequency resource. For example, the resource position of the first frequency resource may be represented by the start position of the first frequency resource and a number of frequency units included in the first frequency resource. The terminal device may determine the start position of the first frequency resource based on the first bit part, that is, determine the start position of the third frequency resource. A number of frequency units included in the third frequency resource may be preconfigured, or may be the same as the number of frequency units included in the first frequency resource, so that the terminal device can determine the resource position of a third frequency unit based on the start position of the third frequency resource and the number of frequency units included in the third frequency resource. When the start position of the first frequency resource is the same as the start position of the third frequency resource, and the number of frequency units included in the first frequency resource is the same as the number of frequency units included in the third frequency resource, it may be considered that a frequency position of the first frequency resource is the same as a frequency position of the third frequency resource.

In a second possible implementation, there is a third frequency spacing between the first frequency resource and the third frequency resource. For example, the third frequency spacing may be a number of frequency units between a start position of the first frequency resource and a start position of the third frequency resource. In this case, the first information may further include a fourth bit part, and the fourth bit part indicates the third frequency spacing. Therefore, the terminal device may determine the first frequency resource based on the first bit part, for example, the start position of the first frequency resource and a number of frequency units included in the first frequency resource, and determine the start position of the third frequency resource based on the start position of the first frequency resource and the third frequency spacing. A number of frequency units included in the third frequency resource may be preconfigured, or may be the same as the number of frequency units included in the first frequency resource, so that the terminal device can determine the resource position of a third frequency unit based on the start position of the third frequency resource and the number of frequency units included in the third frequency resource.

It may be understood that, when the first information does not include the fourth bit part, the terminal device may determine that the start position of the first frequency resource is the same as the start position of the third frequency resource. Alternatively, when the first information includes the fourth bit part, and the fourth bit part indicates that the third frequency spacing is 0 or that a third frequency spacing set is not configured for the terminal device, the terminal device may consider that the start position of the first frequency resource is the same as the start position of the third frequency resource. This is not particularly limited in this application.

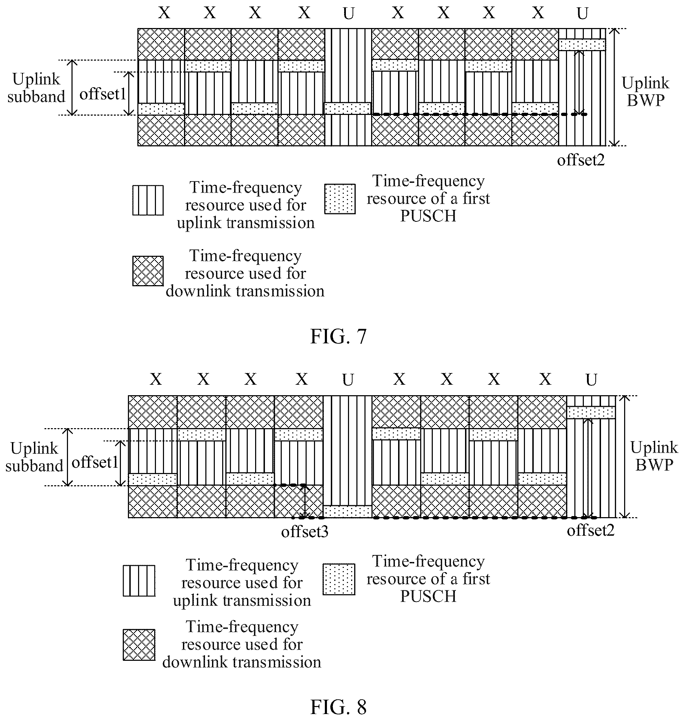

For ease of understanding of embodiments of this application, the following describes two possible frequency hopping patterns with reference to FIG. 7 and FIG. 8. FIG. 7 is a diagram of a frequency hopping pattern in the foregoing first possible implementation, and FIG. 8 is a diagram of a frequency hopping pattern in the foregoing second possible implementation.

Refer to FIG. 7. A resource structure shown in FIG. 7 may be simplified as XXXXUXXXXU. 1st to 4th time units and 6th to 9th time units are SBFD time units, and 5th and 10th time units are non-SBFD time units. The first PUSCH is sent in the 1st, 3rd, 7th, and 9th SBFD time units on the first frequency resource, and the first PUSCH is sent in the 2nd, 4th, 6th, and 8th SBFD time units on the second frequency resource. The first PUSCH is sent in the 5th non-SBFD time unit on the third frequency resource, and the first PUSCH is sent in the 10th non-SBFD time unit on the fourth frequency resource. The first frequency spacing is represented by offset1, the second frequency spacing is represented by offset2, and the first frequency resource overlaps the third frequency resource.

Refer to FIG. 8. A resource structure shown in FIG. 8 may be simplified as XXXXUXXXXU. 1st to 4th time units and 6th to 9th time units are SBFD time units, and 5th and 10th time units are non-SBFD time units. The first PUSCH is sent in the 1st, 3rd, 7th, and 9th SBFD time units on the first frequency resource, and the first PUSCH is sent in the 2nd, 4th, 6th, and 8th SBFD time units on the second frequency resource. The first PUSCH is sent in the 5th non-SBFD time unit on the third frequency resource, and the first PUSCH is sent in the 10th non-SBFD time unit on the fourth frequency resource. The first frequency spacing is represented by offset1, the second frequency spacing is represented by offset2, and the third frequency spacing is represented by offset3.

The foregoing describes the implementations in which the terminal device determines the third frequency resource based on the first frequency resource. In the foregoing first implementation, the first frequency resource, the second frequency resource, the third frequency resource, and the fourth frequency resource may be determined based on three bit parts. In the foregoing second implementation, the first frequency resource, the second frequency resource, the third frequency resource, and the fourth frequency resource may be determined based on four bit parts. In the second implementation, a sum of the first bit part, the second bit part, the third bit part, and the fourth bit part is less than or equal to the first threshold. For ease of description in the following, $N_{total}$ represents a sum of numbers of bits included in the first bit part, the second bit part, the third bit part, and (optionally) the fourth bit part. Details are not described below.

$N_{total}$ is less than or equal to the first threshold. The first threshold may be determined based on a number of frequency units in the uplink BWP.

In a first possible implementation, the first threshold L satisfies:

$$L = \lceil log_2(N^{UL,BWP}(N^{UL,BWP} + 1)/2) \rceil \qquad (1).$$

$N^{UL,BWP}$ represents the number of frequency units in the uplink BWP, and $\lceil \ \rceil$ represents rounding up.

It may be understood that L bits obtained according to formula (1) can indicate one or more consecutive frequency units in the uplink BWP, for example, one or more consecutive non-interleaved virtual resource blocks (virtual resource block, VRB). For example, currently, for a resource allocation type 1, the network device usually uses the L bits obtained according to formula (1) to indicate the frequency units in the uplink BWP, or the frequency units in the uplink BWP and one frequency spacing. If the network device needs to indicate two or more frequency spacings used for frequency hopping, more than L bits need to be used for indication. However, in this embodiment of this application, L bits or fewer bits are used for determining frequency positions of the first frequency resource and the second frequency resource in the uplink subband, resource positions of the third frequency resource and the fourth frequency resource in the uplink BWP, the first frequency spacing, the second frequency spacing, and (optionally) the third frequency spacing. This improves flexibility of resource allocation and reduces bit consumption.

The foregoing describes an example of determining the first threshold. The following separately describes the first bit part, the second bit part, the third bit part, and the fourth bit part.

The first bit part may indicate the first frequency resource. The second bit part indicates the first frequency spacing between the first frequency resource and the second frequency resource. In other words, the second bit part indicates a frequency hopping spacing in the SBFD time unit.

In some implementations, the first frequency spacing may be preconfigured. For example, a first frequency spacing set may be configured for the terminal device, and the second bit part is used as an index value to query the first frequency spacing set, to obtain the first frequency spacing. The first frequency spacing set may be configured by RRC, for example, a frequencyHoppingOffsetLists field in a PUSCH-Config information element of the RRC.

In some implementations, a sum of the number of bits included in the first bit part and the number of bits in the second bit part may be determined based on a number of frequency units in the uplink subband. For example, the sum $N_{1,2}$ of the number $N_1$ of bits included in the first bit part and the number $N_2$ of bits included in the second bit part satisfies:

$$N_{1,2} = N_1 + N_2 = \lceil log_2(N^{UL,subband}(N^{UL,subband} + 1)/2) \rceil \qquad (2).$$

$N^{UL,subband}$ represents the number of frequency units in the uplink subband.

It may be understood that $N_{1,2}$ is determined based on the number of frequency units in the uplink subband, instead of the number of frequency units in the uplink BWP. Currently, the network device usually uses a number of bits determined based on the number of frequency units in the uplink BWP to indicate a resource position, or the frequency units in the uplink BWP and one frequency spacing. For example, when the uplink BWP includes 273 frequency units, and the uplink subband includes 55 frequency units, if $N_{1,2}$ is determined based on the number of frequency units in the uplink subband, 11 may be obtained by substituting the number of frequency units in the uplink subband into formula (2). If $N_{1,2}$ is determined based on the number of frequency units in the uplink BWP, $N_{1,2}$ is 16 (where in this case, a determining manner is the same as the foregoing manner of determining the first threshold, for example, substituting the number of frequency units in the uplink BWP into formula (1)). It can be learned that, in a manner of determining the first bit part provided in this embodiment of this application, the first frequency resource may be indicated by using a small number of bits, so that bit consumption can be reduced.

The foregoing describes the sum $N_{1,2}$ of the number $N_1$ of bits included in the first bit part and the number $N_2$ of bits included in the second bit part. The following separately describes the number $N_1$ of bits included in the first bit part and the number $N_2$ of bits included in the second bit part.

The number $N_2$ of bits in the second bit part may be determined based on a number of first frequency spacings included in the first frequency spacing set. For example, if the first frequency spacing set includes two first frequency spacings, the second bit part may include one bit. For example, when the bit is set to 0, the second bit part indicates one first frequency spacing in the first frequency spacing set; or when the bit is set to 1, the second bit part indicates the other first frequency spacing in the first frequency spacing set. For another example, the second bit part including two bits may indicate four first frequency spacings. This is not particularly limited in this application.

The number $N_1$ of bits included in the first bit part may be determined according to formula (2) based on the number $N_2$ of bits in the second bit part. In other words, the number $N_1$ of bits included in the first bit part satisfies:

$$N_1 = N_{1,2} - N_2 \qquad (3).$$

In some implementations, the first bit part including $N_1$ bits obtained according to formula (3) may indicate the start position of the first frequency resource and the number of frequency units in the first frequency resource. For example, the start position of the first frequency resource may be represented by an index of a start frequency unit in the first frequency resource. For ease of understanding of this embodiment of this application, the following provides, by using an example in which the frequency unit is an RB, two example manners of determining the first bit part.

In a first implementation, an RIV value of the first bit part satisfies the following condition:

$$\text{if } (L_{RBs} - 1) \leq \left\lfloor N_{UL\,Subband}^{size}/2 \right\rfloor,$$
$$RIV = N_{UL\,Subband}^{size}(L_{RBs} - 1) + RB_{start}; \qquad (4)$$
$$\text{else}$$
$$RIV = N_{UL\,Subband}^{size}\left(N_{UL\,Subband}^{size} - L_{RBs} + 1\right) + \left(N_{UL\,Subband}^{size} - 1 - RB_{start}\right).$$

$RB_{start}$ is an index of a start RB of the first frequency resource with reference to the uplink subband. $L_{RBs}$ is a number of RBs included in the first frequency resource. It may be understood that the first frequency resource includes $L_{RBs}$ consecutive RBs. Therefore, the terminal device may determine the first frequency resource based on the RIV value of the first bit part.

It may be understood that, in this embodiment of this application, an index of a start frequency unit with reference to the uplink subband may mean that an index of a frequency unit with a lowest frequency in the uplink subband is 0, and indexes of subsequent frequency units are sequentially increased by 1 in ascending order of frequency. Details are not described below.

In a second implementation, an RIV value of the first bit part satisfies the following condition:

$$\text{if } (L_{RBs} - 1) \leq \left\lfloor N_{UL\,Subband}^{size}/2 \right\rfloor,$$
$$RIV = N_{UL\,Subband}^{size}(L_{RBs} - 1) + RB_{start} - RB_{start}^{UL,subband}; \qquad (5)$$
$$\text{else}$$
$$RIV = N_{UL\,Subband}^{size}\left(N_{UL\,Subband}^{size} - L_{RBs} + 1\right) + \left(N_{UL\,Subband}^{size} - 1 - RB_{start} - RB_{start}^{UL,subband}\right).$$

$RB_{start}$ is an index of a start RB of the first frequency resource with reference to the uplink BWP. $L_{RBs}$ is a number of RBs included in the first frequency resource. It may be understood that the first frequency resource may include $L_{RBs}$ consecutive RBs.

It may be understood that, in this embodiment of this application, an index of a start frequency unit with reference to the uplink BWP may mean that an index of a frequency unit with a lowest frequency in the uplink BWP is 0, and indexes of subsequent frequency units are sequentially increased by 1 in ascending order of frequency. Details are not described below.

The third bit part indicates the second frequency spacing between the third frequency resource and the fourth frequency resource. The second frequency spacing may be a frequency hopping spacing in the non-SBFD time unit.

In some implementations, the second frequency spacing may be preconfigured. For example, a second frequency spacing set may be configured for the terminal device, and the third bit part is used as an index value to query the second frequency spacing set, to obtain the second frequency spacing. The second frequency spacing set may be configured by RRC, for example, a frequencyHoppingOffsetLists field in a PUSCH-Config information element of the RRC. The number $N_3$ of bits in the third bit part may be determined based on a number of second frequency spacings included in the second frequency spacing set. For example, if the second frequency spacing set includes two second frequency spacings, the third bit part may include one bit. For example, when the bit is set to 0, the third bit part indicates one second frequency spacing in the second frequency spacing set; or when the bit is set to 1, the third bit part indicates the other second frequency spacing in the second frequency spacing set. For another example, the third bit part including two bits may indicate four second frequency spacings. This is not particularly limited in this application.

It may be further understood that the first frequency spacing set and the second frequency spacing set are examples for description, and this is not particularly limited in this application. For example, one frequency spacing set may be configured for the terminal device, and both the second bit part and the third bit part may be used as index values to query the frequency spacing set to obtain the first frequency spacing and the second frequency spacing.

In this embodiment of this application, the second bit part and the first frequency spacing set may be used for determining the frequency hopping pattern in the SBFD time unit, and the third bit part and the second frequency spacing set may be used for determining the frequency hopping pattern in the non-SBFD time unit. In other words, the frequency hopping pattern in the SBFD time unit and the frequency hopping pattern in the non-SBFD time unit may be separately designed. This can effectively improve flexibility of frequency hopping.

There is the third frequency spacing between the first frequency resource and the third frequency resource. Optionally, the first information may further include the fourth bit part, and the fourth bit part indicates the third frequency spacing. The third frequency spacing may be a frequency spacing between the first frequency resource in the SBFD time unit and the third frequency resource in the non-SBFD time unit. For example, the third frequency spacing represents a difference between an index of a start frequency unit in the third frequency resource and an index of the start frequency unit in the first frequency resource.

In some implementations, the third frequency spacing may be preconfigured. For example, a third frequency spacing set may be configured for the terminal device, and the fourth bit part is used as an index value to query the third frequency spacing set, to obtain the third frequency spacing. The third frequency spacing set may be configured by RRC, for example, an N_offsetbits field in the RRC. The number $N_4$ of bits in the fourth bit part may be determined based on a number of third frequency spacings included in the third frequency spacing set. For example, if the third frequency spacing set includes two third frequency spacings, the fourth bit part may include one bit. For example, when the bit is set to 0, the fourth bit part indicates one third frequency spacing in the third frequency spacing set; or when the bit is set to 1, the fourth bit part indicates the other third frequency spacing in the third frequency spacing set. For another example, the fourth bit part including two bits may indicate four third frequency spacings. This is not particularly limited in this application.

The foregoing separately describes the first bit part, the second bit part, the third bit part, and the fourth bit part by using examples. The fourth bit part is optional. For example, when there is no frequency spacing between the first frequency resource and the third frequency resource, the first information may not include the fourth bit part. When there is the third frequency spacing between the first frequency resource and the third frequency resource, the first information may include the fourth bit part, or may not include the fourth bit part (where for example, the second bit part or the third bit part may be reused as an index value to query the third frequency spacing set, to obtain the third frequency spacing). This is not particularly limited in this application.

In this embodiment of this application, $N_{total}$ is less than or equal to the first threshold L. Currently, the L bits obtained according to formula (1) usually indicate a resource position in the BWP. If the network device needs to indicate two or more frequency spacings used for frequency hopping, the network device needs to use more than L bits for indication. In other words, the network device needs to use bits whose number is greater than the first threshold to indicate the resource position in the BWP and the frequency spacings used for frequency hopping. However, in this application, the first frequency resource is a frequency resource in the uplink subband, and the number of frequency units included in the uplink subband is less than the number of frequency units included in the uplink BWP. Therefore, the first bit part generated by the network device through encoding based on the number of frequency units in the uplink subband may indicate the first frequency resource in the uplink subband by using a small number of bits. Then, the second frequency resource in the uplink subband, and the third frequency resource and the fourth frequency resource in the uplink BWP are indicated by indicating the second frequency spacing and the third frequency spacing. In other words, bits whose number is less than or equal to the first threshold can be used for determining two resource positions in the BWP and two resource positions in the uplink subband. This improves flexibility of resource allocation and reduces bit consumption.

In some implementations, the first bit part, the second bit part, the third bit part, and (optionally) the fourth bit part may be carried in a first field, and the first field indicates a frequency resource for sending the first PUSCH. For example, the first field may be an FDRA field in downlink control information (downlink control information, DCI).

When the network device uses a resource configuration type 1, a length of the first field may be equal to $N_{total}$. In other words, the first field may be any arrangement and combination of the first bit part, the second bit part, the third bit part, and (optionally) the fourth bit part. For example, the uplink BWP includes 273 frequency units. For example, according to formula (1), it may be learned that the first threshold L is equal to 16. The uplink subband includes 55 frequency units, and according to formula (2), it may be learned that the sum of the number $N_1$ of bits included in the first bit part and the number of bits included in the second bit part is equal to 11. The second frequency spacing set includes two second frequency spacings, and it may be learned that the number $N_3$ of bits included in the third bit part is equal to 1. There is the third frequency spacing between the first frequency resource and the third frequency resource, the third frequency spacing is indicated by the fourth bit part, and the third frequency spacing set includes two third frequency spacings. It may be learned that the number $N_4$ of bits included in the fourth bit part is equal to 1. The sum $N_{total}$ of the numbers of bits in the first bit part, the second bit part, the third bit part, and the fourth bit part is equal to 13. In other words, the length of the first field is 13.

In some implementations, alternatively, the length of the first field may be equal to the first threshold L obtained according to formula (1). In this implementation, if $N_{total}$ is less than the first threshold L, in addition to including the first bit part, the second bit part, the third bit part, and (optionally) the fourth bit part provided in this embodiment of this application, the first field may be padded with zeros. This is not particularly limited in this application.

For ease of understanding of this embodiment of this application, the following shows some possible arrangement manners of the first bit part (represented by $N_1$), the second bit part (represented by $N_2$), the third bit part (represented by $N_3$), and the fourth bit part (represented by $N_4$) in the first field.

When the length of the first field is equal to $N_{total}$, and the first field includes the first bit part, the second bit part, the third bit part, and the fourth bit part; or when the length of the first field is equal to the first threshold, the first field includes the first bit part, the second bit part, the third bit part, and the fourth bit part, and the first threshold is equal to $N_{total}$, the arrangement manners are as follows:

Arrangement manner 1:

From a most significant bit (most significant bit, MSB) to a least significant bit (least significant bit, LSB), a sequence is the fourth bit part, the third bit part, the second bit part, and the first bit part, and may be represented by $[N_4, N_3, N_2, N_1]$.

Arrangement manner 2:

From an MSB to an LSB, a sequence is the third bit part, the fourth bit part, the second bit part, and the first bit part, and may be represented by $[N_3, N_4, N_2, N_1]$.

Arrangement manner 3:

From an MSB to an LSB, a sequence is the fourth bit part, the second bit part, the third bit part, and the first bit part, and may be represented by $[N_4, N_2, N_3, N_1]$.

Arrangement manner 4:

From an MSB to an LSB, a sequence is the second bit part, the fourth bit part, the third bit part, and the first bit part, and may be represented by $[N_2, N_4, N_3, N_1]$.

Arrangement manner 5:

From an MSB to an LSB, a sequence is the third bit part, the second bit part, the fourth bit part, and the first bit part, and may be represented by $[N_3, N_2, N_4, N_1]$.

Arrangement manner 6:

From an MSB to an LSB, a sequence is the second bit part, the third bit part, the fourth bit part, and the first bit part, and may be represented by $[N_2, N_3, N_4, N_1]$.

It may be understood that, when the length of the first field is equal to the first threshold, the first field includes the first bit part, the second bit part, the third bit part, and the fourth bit part, and the first threshold is greater than $N_{total}$, the first field may be padded with zeros, so that the length of the first field is equal to the first threshold. In other words, a number of zero-padding bits is equal to a difference between the first threshold and $N_{total}$.

It may be further understood that a zero-padding position is not specially limited in this application. For example, the zero-padding bit may be set at the most significant bit, at the least significant bit, between the first bit part and the second bit part, between the second bit part and the third bit part, between the third bit part and the fourth bit part, between the first bit part and the third bit part, between the second bit part and the fourth bit part, between the first bit part and the fourth bit part, or the like in the first field. For ease of understanding of this embodiment of this application, the following describes a structure of the first field including zero bits by using an example with reference to the foregoing first arrangement possibility:

Arrangement manner a:

From the MSB to the LSB, a sequence is a zero bit part, the fourth bit part, the third bit part, the second bit part, and the first bit part, and may be represented by $[0, N_4, N_3, N_2, N_1]$.

Arrangement manner b:

From the MSB to the LSB, a sequence is the fourth bit part, the third bit part, the second bit part, the first bit part, and a zero bit part, and may be represented by $[N_4, N_3, N_2, N_1, 0]$.

Arrangement manner c:

From the MSB to the LSB, a sequence is the fourth bit part, the third bit part, a zero bit part, the second bit part, and the first bit part, and may be represented by $[N_4, N_3, 0, N_2, N_1]$.

Arrangement manner d:

From the MSB to the LSB, a sequence is the fourth bit part, the third bit part, the second bit part, a zero bit part, and the first bit part, and may be represented by $[N_4, N_3, N_2, 0, N_1]$.

Arrangement manner e:

From the MSB to the LSB, a sequence is the fourth bit part, a zero bit part, the third bit part, the second bit part, and the first bit part, and may be represented by $[N_4, 0, N_3, N_2, N_1]$.

It may be understood that, in the foregoing example, an example in which the first field includes the fourth bit part is used. If the first field does not include the fourth bit part, $N_4$ in the foregoing example may be deleted. If the first field includes the zero bit part, the original number $N_4$ of bits may be added to the number of zero bits in the foregoing example.

It may be further understood that, in some implementations, the first field may not include the second bit part (or may not include the second bit part or the fourth bit part, or may not include the third bit part, or may not include the third bit part or the fourth bit part). Similarly, $N_2$ (or $N_2$ and $N_4$, or $N_3$, or $N_3$ and $N_4$) in the foregoing example may be deleted. If the first field includes the zero bit part, the original number $N_2$ (or $N_2$ and $N_4$, or $N_3$, or $N_3$ and $N_4$) of bits may be added to the number of zero bits in the foregoing example. This is not particularly limited in this application.

It may be further understood that the arrangement manner of the first bit part, the second bit part, the third bit part, and (optionally) the fourth bit part is not particularly limited in embodiments of this application. The foregoing example is merely an example for description. For brevity, examples are not listed herein one by one.

//Time domain: Frequency hopping pattern

The foregoing describes the first field (including the first bit part, the second bit part, the third bit part, and optionally, the fourth bit part) that indicates the frequency resource. In some implementations, the first information may further include a second field, and the second field indicates the SBFD time unit and the non-SBFD time unit. Therefore, the terminal device can learn, based on the first information, a specific SBFD time unit or specific SBFD time units in which the first PUSCH is sent in a frequency hopping manner on the first frequency resource and the second frequency resource, and a specific non-SBFD time unit or specific non-SBFD time units in which the first PUSCH is sent in a frequency hopping manner on the third frequency resource and the fourth frequency resource.

For ease of understanding of this embodiment of this application, the following describes several possible frequency hopping manners. For ease of description, the frequency hopping pattern in the SBFD time unit is referred to as a first frequency hopping pattern, and the frequency hopping pattern in the non-SBFD time unit is referred to as a second frequency hopping pattern below.

Frequency hopping manner 1:

The first PUSCH may be a PUSCH repetition type A or a TBoMS PUSCH w/ or w/o repetition. For the first PUSCH, intra-slot frequency hopping may be used.

When reference is made to the uplink subband for a position of a frequency resource, the first frequency hopping pattern, to be specific, the start position of the first frequency resource, a start position of the second frequency resource, a symbol associated with the first frequency resource, and a symbol associated with the second frequency resource, satisfies the following condition:

$$RB_{start1}(i) = \begin{cases} RB_{start1} & i = 0 \\ (RB_{start1} + RB_{offset1}) \bmod N_{UL\,Subband}^{size} & i = 1 \end{cases} \quad (6).$$

When i=0, $RB_{start1}(0)$ represents an index of the start frequency unit in the first frequency resource with reference to the uplink subband.

When i=1, $RB_{start1}(1)$ represents an index of a start frequency unit in the second frequency resource with reference to the uplink subband.

$RB_{start1}$ represents an index of the start frequency unit in the first frequency resource with reference to the uplink subband.

A number of symbols associated with the first frequency resource is $\lfloor N_{symb}^{PUSCH,s}/2 \rfloor$, and a number of symbols associated with the second frequency resource is $N_{symb}^{PUSCH,s} - \lfloor N_{symb}^{PUSCH,s}/2 \rfloor$, where $N_{symb}^{PUSCH,s}$ represents a number of symbols used for sending a first signal in one SBFD slot. For example, when $N_{symb}^{PUSCH,s} = 7$, the first frequency resource in first three symbols in the seven symbols occupied by the first PUSCH in the SBFD slot is used for sending the first PUSCH, and the second frequency resource in last four symbols in the seven symbols occupied by the first PUSCH in the SBFD slot is used for sending the first PUSCH.

$RB_{offset1}$ represents the first frequency spacing. It may be understood that the first frequency spacing is used for determining the resource position of the second frequency resource. Due to the presence of a modulo operation (mod), the first frequency spacing may be equal to a difference between the index of the start frequency unit in the second frequency resource and the index of the start frequency unit in the first frequency resource, or the first frequency spacing may not be equal to the difference. Details about the first frequency spacing are not described below. $N_{UL\,Subband}^{size}$ represents the number of frequency units included in the uplink subband.

When reference is made to the uplink BWP for a position of a frequency resource, the first frequency hopping pattern, to be specific, the start position of the first frequency resource, a start position of the second frequency resource, a symbol associated with the first frequency resource, and a symbol associated with the second frequency resource, satisfies the following condition:

$$RB_{start1}(i) = \begin{cases} RB_{start1} & i = 0 \\ (RB_{start1} + RB_{offset1} - RB_{start}^{UL,subband}) \bmod N_{UL\,Subband}^{size} + RB_{start}^{UL,subband} & i = 1 \end{cases} \quad (7).$$

When i=0, $RB_{start1}(0)$ represents an index of the start frequency unit in the first frequency resource with reference to the uplink BWP.

When i=1, $RB_{start1}(1)$ represents an index of a start frequency unit in the second frequency resource with reference to the uplink BWP.

$RB_{start1}$ represents an index of the start frequency unit in the first frequency resource with reference to the uplink BWP.

$RB_{offset1}$ represents the first frequency spacing. $RB_{UL\,Subband}^{size}$ represents the number of frequency units included in the uplink subband. $RB_{start}^{UL,subband}$ represents an index of a start frequency unit in the uplink subband with reference to the BWP.

A number of symbols used for the first frequency resource is $\lfloor N_{symb}^{PUSCH,s}/2 \rfloor$, and a number of symbols used for the second frequency resource is $N_{symb}^{PUSCH,s} - \lfloor N_{symb}^{PUSCH,s}/2 \rfloor$, where $N_{symb}^{PUSCH,s}$ represents a number of symbols used for sending the first PUSCH in one SBFD slot.

When reference is made to the uplink BWP for a position of a frequency resource, the second frequency hopping pattern, to be specific, the start position of the third frequency resource, a start position of the fourth frequency resource, a symbol associated with the third frequency resource, and a symbol associated with the fourth frequency resource, satisfies the following condition:

$$RB_{start2}(i) = \begin{cases} RB_{start2} & i = 0 \\ (RB_{start2} + RB_{offset,2}) \bmod N_{BWP}^{size} & i = 1 \end{cases} \quad (8).$$

When i=0, $RB_{start2}(0)$ represents an index of the start frequency unit in the third frequency resource with reference to the uplink BWP.

When i=1, RB$_{start2}$(1) represents an index of a start frequency unit in the fourth frequency resource with reference to the uplink BWP.

RB$_{start2}$ represents an index of the start frequency unit in the third frequency resource with reference to the uplink BWP.

RB$_{offset2}$ represents the second frequency spacing. It may be understood that the second frequency spacing is used for determining the resource position of the fourth frequency resource. Due to the presence of a modulo operation (mod), the second frequency spacing may be equal to a difference between the index of the start frequency unit in the fourth frequency resource and the index of the start frequency unit in the third frequency resource, or the second frequency spacing may not be equal to the difference. Details about the second frequency spacing are not described below. $N_{BWP}^{size}$ represents the number of frequency units included in the uplink BWP.

A number of symbols used for the first frequency resource is $\lfloor N_{symb}^{PUSCH,s}/2 \rfloor$, and a number of symbols used for the second frequency resource is $N_{symb}^{PUSCH,s} - \lfloor N_{symb}^{PUSCH,s}/2 \rfloor$, where $N_{symb}^{PUSCH,s}$ represents a number of symbols used for sending the first PUSCH in one non-SBFD slot.

Frequency hopping manner 2:

The first PUSCH may be a PUSCH repetition type A or a TBoMS PUSCH w/ or w/o repetition. For the first PUSCH, inter-slot frequency hopping may be used.

When reference is made to the uplink subband for a position of a frequency resource, the first frequency hopping pattern, to be specific, the start position of the first frequency resource, a start position of the second frequency resource, a slot associated with the first frequency resource, and a slot associated with the second frequency resource, satisfies the following condition:

$$\text{RB}_{start1}(n_s^\mu) = \begin{cases} \text{RB}_{start1} & n_s^\mu \bmod 2 = 0 \\ (\text{RB}_{start1} + \text{RB}_{offset1}) \bmod N_{UL\ Subband}^{size} & n_s^\mu \bmod 2 = 1 \end{cases} \tag{9}.$$

$n_s^\mu$ represents a slot index of a current slot in a system frame, and the current slot is an SBFD slot occupied by multi-slot PUSCH transmission.

When $n_s^\mu \bmod 2 = 0$, $\text{RB}_{start1}(n_s^\mu)$ RB$_{start1}$ represents an index of the start frequency unit in the first frequency resource with reference to the uplink subband, and the first frequency resource is associated with an SBFD slot corresponding to $n_s^\mu \bmod 2 = 0$.

When $n_s^\mu \bmod 2 = 1$, $\text{RB}_{start1}(n_s^\mu)$ represents an index of a start frequency unit in the second frequency resource with reference to the uplink subband, and the second frequency resource is associated with an SBFD slot corresponding to $n_s^\mu \bmod 2 = 1$.

RB$_{start1}$ represents an index of the start frequency unit in the first frequency resource with reference to the uplink subband.

RB$_{offset1}$ represents the first frequency spacing. $N_{UL\ Subband}^{size}$ represents the number of frequency units included in the uplink subband.

When reference is made to the uplink BWP for a position of a frequency resource, the first frequency hopping pattern, to be specific, the start position of the first frequency resource, a start position of the second frequency resource, a slot associated with the first frequency resource, and a slot associated with the second frequency resource, satisfies the following condition:

$$\text{RB}_{start1}(n_s^\mu) = \begin{cases} \text{RB}_{start1} & n_s^\mu \bmod 2 = 0 \\ (\text{RB}_{start1} + \text{RB}_{offset} - \text{RB}_{start}^{UL,subband}) \bmod N_{UL\ Subband}^{size} + \text{RB}_{start}^{UL,subband} & n_s^\mu \bmod 2 = 1 \end{cases} \tag{10}.$$

$n_s^\mu$ represents a slot index of a current slot in a system frame, and the current slot is an SBFD slot occupied by multi-slot PUSCH transmission.

When $n_s^\mu \bmod 2 = 0$, $\text{RB}_{\text{start1}}\left(n_s^\mu\right)$ represents an index of the start frequency unit in the first frequency resource with reference to the BWP, and the first frequency resource is associated with an SBFD slot corresponding to $n_s^\mu \bmod 2 = 0$.

When $n_s^\mu \bmod 2 = 1$, $\text{RB}_{\text{start1}}\left(n_s^\mu\right)$ represents an index of a start frequency unit in the second frequency resource with reference to the BWP, and the second frequency resource is associated with an SBFD slot corresponding to $n_s^\mu \bmod 2 = 1$.

$\text{RB}_{\text{start1}}$ represents an index of the start frequency unit in the first frequency resource with reference to the uplink BWP.

$\text{RB}_{\text{offset1}}$ represents the first frequency spacing. $\text{RB}_{\text{start}}^{\text{UL,subband}}$ represents an index of a start frequency unit in the uplink subband with reference to the BWP. $\text{N}_{\text{UL Subband}}^{\text{size}}$ represents the number of frequency units included in the uplink subband.

When reference is made to the uplink BWP for a position of a frequency resource, the second frequency hopping pattern, to be specific, the start position of the third frequency resource, a start position of the fourth frequency resource, a slot associated with the third frequency resource, and a slot associated with the fourth frequency resource, satisfies the following condition:

$$\text{RB}_{\text{start2}}\left(n_s^\mu\right) = \begin{cases} \text{RB}_{\text{start2}} & n_s^\mu \bmod 2 = 0 \\ (\text{RB}_{\text{start2}} + \text{RB}_{\text{offset2}}) \bmod N_{BWP}^{size} & n_s^\mu \bmod 2 = 1 \end{cases} \qquad (11).$$

$n_s^\mu$ represents a slot index of a current slot in a system frame, and the current slot is a non-SBFD slot occupied by multi-slot first PUSCH transmission.

When $n_s^\mu \bmod 2 = 0$, $\text{RB}_{\text{start2}}\left(n_s^\mu\right)$ represents an index of the start frequency unit in the third frequency resource with reference to the BWP, and the third frequency resource is associated with a non-SBFD slot corresponding to $n_s^\mu \bmod 2 = 0$.

When $n_s^\mu \bmod 2 = 1$, $\text{RB}_{\text{start2}}\left(n_s^\mu\right)$ represents an index of a start frequency unit in the fourth frequency resource with reference to the BWP, and the fourth frequency resource is associated with a non-SBFD slot corresponding to $n_s^\mu \bmod 2 = 1$.

$\text{RB}_{\text{start2}}$ represents an index of the start frequency unit in the third frequency resource with reference to the uplink BWP.

$\text{RB}_{\text{offset2}}$ represents the second frequency spacing. $\text{N}_{\text{BWP}}^{\text{size}}$ represents the number of frequency units included in the BWP.

Frequency hopping manner 3:

The first PUSCH supports DMRS bundling (DMRS bundling), which is also referred to as joint channel estimation (Joint channel estimation, JCE). For the first PUSCH, inter-slot frequency hopping for DMRS bundling may be used.

When reference is made to the uplink subband for a position of a frequency resource, the first frequency hopping pattern, to be specific, the start position of the first frequency resource, a start position of the second frequency resource, a slot associated with the first frequency resource, and a slot associated with the second frequency resource, satisfies the following condition:

$$\text{RB}_{\text{start1}}\left(n_{s,f}^\mu\right) = \begin{cases} \text{RB}_{\text{start1}} & \left\lfloor \dfrac{n_{s,f}^\mu + n_f \cdot N_{\text{slot}}^{\text{frame},\mu}}{N_{FH}} \right\rfloor \bmod 2 = 0 \\ (\text{RB}_{\text{start1}} + \text{RB}_{\text{offset}}) \bmod N_{UL\,Subband}^{size} & \left\lfloor \dfrac{n_{s,f}^\mu + n_f \cdot N_{\text{slot}}^{\text{frame},\mu}}{N_{FH}} \right\rfloor \bmod 2 = 1 \end{cases} \qquad (12).$$

$n_{s,f}^\mu$ represents a slot index of a current slot in a system frame, and the current slot is an SBFD slot occupied by multi-slot PUSCH transmission.

$n_f$ represents an index of the system frame including the current slot. $N_{slot}^{frame,\mu}$ represents a number of slots included in the system frame.

When $\left\lfloor \frac{n_{s,f}^{\mu}+n_f \cdot N_{slot}^{frame,\mu}}{N_{FH}} \right\rfloor \mod 2 = 0$, $RB_{start1}(n_{s,f}^{\mu})$ represents an index of the start frequency unit in the first frequency resource with reference to the uplink subband, and the first frequency resource is associated with an SBFD slot corresponding to $\left\lfloor \frac{n_{s,f}^{\mu}+n_f \cdot N_{slot}^{frame,\mu}}{N_{FH}} \right\rfloor \mod 2 = 0$.

When $\left\lfloor \frac{n_{s,f}^{\mu}+n_f \cdot N_{slot}^{frame,\mu}}{N_{FH}} \right\rfloor \mod 2 = 1$, $RB_{start1}(n_{s,f}^{\mu})$ represents an index of a start frequency unit in the second frequency resource with reference to the uplink subband, and the second frequency resource is associated with an SBFD slot corresponding to $\left\lfloor \frac{n_{s,f}^{\mu}+n_f \cdot N_{slot}^{frame,\mu}}{N_{FH}} \right\rfloor \mod 2 = 1$.

$N_{FH}$ represents a first parameter, and the first parameter indicates to use the first frequency resource or the second frequency resource in $N_{FN}$ consecutive slots.

$RB_{offset1}$ represents the first frequency spacing. $N_{UL\,Subband}^{size}$ represents the number of frequency units included in the uplink subband.

When reference is made to the uplink BWP for a position of a frequency resource, the first frequency hopping pattern, to be specific, the start position of the first frequency resource, a start position of the second frequency resource, a slot associated with the first frequency resource, and a slot associated with the second frequency resource, satisfies the following condition:

$$RB_{start}(n_{s,f}^{\mu}) =$$

$$\begin{cases} RB_{start1} & \left\lfloor \frac{n_{s,f}^{\mu}+n_f \cdot N_{slot}^{frame,\mu}}{N_{FH}} \right\rfloor \mod 2 = 0 \\ (RB_{start1} + RB_{offset1} - RB_{start}^{UL,subband}) \mod N_{UL\,Subband}^{size} + RB_{start}^{UL,subband} & \left\lfloor \frac{n_{s,f}^{\mu}+n_f \cdot N_{slot}^{frame,\mu}}{N_{FH}} \right\rfloor \mod 2 = 1 \end{cases} \quad (13).$$

$n_{s,f}^{\mu}$ represents a slot index of a current slot in a system frame, and the current slot is an SBFD slot occupied by multi-slot PUSCH transmission.

$n_f$ represents an index of the system frame including the current slot. $N_{slot}^{frame,\mu}$ represents a number of slots included in the system frame.

When $\left\lfloor \frac{n_{s,f}^{\mu}+n_f \cdot N_{slot}^{frame,\mu}}{N_{FH}} \right\rfloor \mod 2 = 0$, $RB_{start1}(n_{s,f}^{\mu})$ represents an index of the start frequency unit in the first frequency resource with reference to the BWP, and the first frequency resource is associated with an SBFD slot corresponding to $\left\lfloor \frac{n_{s,f}^{\mu}+n_f \cdot N_{slot}^{frame,\mu}}{N_{FH}} \right\rfloor \mod 2 = 0$.

When $\left\lfloor \frac{n_{s,f}^{\mu}+n_f \cdot N_{slot}^{frame,\mu}}{N_{FH}} \right\rfloor \mod 2 = 1$, $RB_{start1}(n_{s,f}^{\mu})$ represents an index of a start frequency unit in the second frequency resource with reference to the BWP, and the second frequency resource is associated with an SBFD slot corresponding to $\left\lfloor \frac{n_{s,f}^{\mu}+n_f \cdot N_{slot}^{frame,\mu}}{N_{FH}} \right\rfloor \mod 2 = 1$.

$N_{FH}$ represents a first parameter, and the first parameter indicates to use the first frequency resource or the second frequency resource in $N_{FN}$ consecutive slots. It may be understood that a physical meaning of the first parameter is that frequency hopping is performed once every $N_{FH}$ slots.

$RB_{offset1}$ represents the first frequency spacing. $RB_{start}^{UL\,Subband}$ Subband represents an index of a start frequency unit in the uplink subband with reference to the BWP. $N_{UL\,Subband}^{size}$ represents the number of frequency units included in the uplink subband.

When reference is made to the uplink BWP for a position of a frequency resource, the second frequency hopping pattern, to be specific, the start position of the third frequency resource, a start position of the fourth frequency resource, a slot associated with the third frequency resource, and a slot associated with the fourth frequency resource, satisfies the following condition:

$$\mathrm{RB}_{\mathrm{start2}}\left(n_{s,f}^{\mu}\right) = \begin{cases} \mathrm{RB}_{\mathrm{start2}} & \left\lfloor \frac{n_{s,f}^{\mu}+n_f\cdot N_{\mathrm{slot}}^{\mathrm{frame},\mu}}{N_{FH}} \right\rfloor \mathrm{mod}\,2=0 \\ (\mathrm{RB}_{\mathrm{start2}} + \mathrm{RB}_{\mathrm{offset}})\mathrm{mod}N_{BWP}^{size} & \left\lfloor \frac{n_{s,f}^{\mu}+n_f\cdot N_{\mathrm{slot}}^{\mathrm{frame},\mu}}{N_{FH}} \right\rfloor \mathrm{mod}\,2=1 \end{cases} \quad (14).$$

$n_{s,f}^{\mu}$ represents a slot index of a current slot in a system frame, and the current slot is a non-SBFD slot occupied by multi-slot PUSCH transmission.

$n_f$ represents an index of the system frame including the current slot. $N_{\mathrm{slot}}^{\mathrm{frame},\mu}$ represents a number of slots included in the system frame.

When $\left\lfloor \frac{n_{s,f}^{\mu}+n_f\cdot N_{\mathrm{slot}}^{\mathrm{frame},\mu}}{N_{FH}} \right\rfloor \mathrm{mod}\,2 = 0$, $\mathrm{RB}_{\mathrm{start2}}\left(n_{s,f}^{\mu}\right)$ represents an index of the start frequency unit in the third frequency resource with reference to the BWP, and the third frequency resource is associated with a non-SBFD slot corresponding to $\left\lfloor \frac{n_{s,f}^{\mu}+n_f\cdot N_{\mathrm{slot}}^{\mathrm{frame},\mu}}{N_{FH}} \right\rfloor \mathrm{mod}\,2 = 0$.

When $\left\lfloor \frac{n_{s,f}^{\mu}+n_f\cdot N_{\mathrm{slot}}^{\mathrm{frame},\mu}}{N_{FH}} \right\rfloor \mathrm{mod}\,2 = 1$, $\mathrm{RB}_{\mathrm{start2}}\left(n_{s,f}^{\mu}\right)$ represents an index of a start frequency unit in the fourth frequency resource with reference to the BWP, and the fourth frequency resource is associated with a non-SBFD slot corresponding to $\left\lfloor \frac{n_{s,f}^{\mu}+n_f\cdot N_{\mathrm{slot}}^{\mathrm{frame},\mu}}{N_{FH}} \right\rfloor \mathrm{mod}\,2 = 1$.

$N_{FH}$ represents a first parameter, and the first parameter indicates to use the third frequency resource or the fourth frequency resource in $N_{FN}$ consecutive slots.

$\mathrm{RB}_{\mathrm{offset2}}$ represents the second frequency spacing. $N_{BWP}^{size}$ represents the number of frequency units included in the BWP.

Frequency hopping manner 4:

The first PUSCH is a PUSCH repetition type B. For the first PUSCH, inter-repetition frequency hopping may be used.

When reference is made to the uplink subband for a position of a frequency resource, the first frequency hopping pattern, to be specific, the start position of the first frequency resource, a start position of the second frequency resource, a slot associated with the first frequency resource, and a slot associated with the second frequency resource, satisfies the following condition:

$$\mathrm{RB}_{\mathrm{start1}}(n) = \begin{cases} \mathrm{RB}_{\mathrm{start1}} & n\,\mathrm{mod}\,2=0 \\ (\mathrm{RB}_{\mathrm{start1}} + \mathrm{RB}_{\mathrm{offset1}})\mathrm{mod}N_{UL\,Subband}^{size} & n\,\mathrm{mod}\,2=1 \end{cases} \quad (15).$$

n represents an actual repetition (actual repetition) in an $n^{th}$ nominal repetition (nominal repetition).

When $n\,\mathrm{mod}\,2 = 0$, $\mathrm{RB}_{\mathrm{start1}}$ (n) represents an index of the start frequency unit in the first frequency resource with reference to the uplink subband, and the first frequency resource is associated with all actual repetitions in an SBFD slot corresponding to $n\,\mathrm{mod}\,2 = 0$.

When $n\,\mathrm{mod}\,2 = 1$, $\mathrm{RB}_{\mathrm{start1}}$ (n) represents an index of a start frequency unit in the second frequency resource with reference to the uplink subband, and the second frequency resource is associated with all actual repetitions in an SBFD slot corresponding to $n\,\mathrm{mod}\,2 = 1$.

$\mathrm{RB}_{\mathrm{offset1}}$ represents the first frequency spacing. $N_{UL\,Subband}^{size}$ represents the number of frequency units included in the uplink subband.

When reference is made to the uplink BWP for a position of a frequency resource, the first frequency hopping pattern, to be specific, the start position of the first frequency resource, a start position of the second frequency resource, a symbol associated with the first frequency resource, and a symbol associated with the second frequency resource, satisfies the following condition:

$$RB_{start1}(n) = \begin{cases} RB_{start1} & n\,mod\,2 = 0 \\ (RB_{start1} + RB_{offset} - RB_{start}^{UL,subband})mod N_{UL\,Subband}^{size} + RB_{start}^{UL,subband} & n\,mod\,2 = 1 \end{cases}$$

$$(16).$$

n represents an actual repetition in an $n^{th}$ nominal repetition.

When $n\,mod\,2 = 0$, $RB_{start1}(n)$ represents an index of the start frequency unit in the first frequency resource with reference to the BWP. The first frequency resource is associated with all actual repetitions in an SBFD slot corresponding to $n\,mod\,2 = 0$.

When $n\,mod\,2 = 1$, $RB_{start1}(n)$ represents an index of a start frequency unit in the second frequency resource with reference to the BWP. The second frequency resource is associated with all actual repetitions in an SBFD slot corresponding to $n\,mod\,2 = 1$.

$RB_{offset1}$ represents the first frequency spacing. $RB_{start}^{UL\,Subband}$ represents an index of a start frequency unit in the uplink subband with reference to the BWP. $N_{UL\,Subband}^{size}$ represents the number of frequency units included in the uplink subband.

When reference is made to the uplink BWP for a position of a frequency resource, the second frequency hopping pattern, to be specific, the start position of the third frequency resource, a start position of the fourth frequency resource, a symbol associated with the third frequency resource, and a symbol associated with the fourth frequency resource, satisfies the following condition:

$$RB_{start2}(n) = \begin{cases} RB_{start2} & n\,mod\,2 = 0 \\ (RB_{start2} + RB_{offset2})mod N_{BWP}^{size} & n\,mod\,2 = 1 \end{cases} \quad (17).$$

n represents an actual repetition in an $n^{th}$ nominal repetition.

When $n\,mod\,2 = 0$, $RB_{start2}(n)$ represents an index of the start frequency unit in the third frequency resource with reference to the BWP. The third frequency resource is associated with all actual repetitions in a non-SBFD slot corresponding to $n\,mod\,2 = 0$.

When $n\,mod\,2 = 1$, $RB_{start2}(n)$ represents an index of a start frequency unit in the fourth frequency resource with reference to the BWP. The fourth frequency resource is associated with all actual repetitions in a non-SBFD slot corresponding to $n\,mod\,2 = 1$.

$RB_{offset2}$ represents the second frequency spacing. $N_{BWP}^{size}$ represents the number of frequency units included in the BWP.

It may be understood that the foregoing describes the frequency hopping pattern in the SBFD time unit and the frequency hopping pattern in the non-SBFD time unit in various frequency hopping manners. For ease of understanding of this embodiment of this application, when there is the third frequency spacing between the first frequency resource and the third frequency resource, the start position of the first frequency resource and the start position of the third frequency resource may satisfy the following condition:

$$RB_{start2} = (RB_{start1} + RB_{offset3})mod N_{BWP}^{size} \quad (18).$$

$RB_{start1}$ represents an index of the start frequency unit in the first frequency resource with reference to the BWP. For example, $RB_{start1}$ may be $RB_{start1}(0)$ in formula (7), or $RB_{start1}(n_s^{\mu})$ in formula (10) when $n_s^{\mu}\,mod\,2 = 0$, or $RB_{start1}(n_{s,f}^{\mu})$ in formula (13) when $\left\lfloor \frac{n_{s,f}^{\mu} + n_f \cdot N_{slot}^{frame,\mu}}{N_{FH}} \right\rfloor mod\,2 = 0$, or $RB_{start1}(n)$ in formula (16) when $n\,mod\,2 = 0$.

$RB_{start2}$ represents an index of the start frequency unit in the third frequency resource with reference to the BWP. For example, $RB_{start2}$ may be $RB_{start2}(0)$ in formula (8), or $RB_{start2}(n_s^{\mu})$ in formula (11) when $n_s^{\mu}\,mod\,2 = 0$, or $RB_{start2}(n_{s,f}^{\mu})$ in formula (14) when $\left\lfloor \frac{n_{s,f}^{\mu} + n_f \cdot N_{slot}^{frame,\mu}}{N_{FH}} \right\rfloor mod\,2 = 0$, or $RB_{start2}(n)$ in formula (15) when $n\,mod\,2 = 0$.

$RB_{offset3}$ represents the third frequency spacing. It may be understood that the third frequency spacing is used for determining the resource position of the third frequency resource. Due to the presence of a modulo operation (mod), the third frequency spacing may be equal to a difference between the index of the start frequency unit in the third frequency resource and the index of the start frequency unit in the first frequency resource, or the third frequency spacing may not be equal to the difference. Details about the third frequency spacing are not described below. $N_{BWP}^{size}$ represents the number of frequency units included in the BWP.

S620: Based on the first information, the terminal device sends the first PUSCH in the SBFD time unit in a frequency hopping manner on the first frequency resource and the second frequency resource, and sends the first PUSCH in the non-SBFD time unit in a frequency hopping manner on the third frequency resource and the fourth frequency resource.

Correspondingly, the network device receives the first PUSCH in the SBFD time unit in a frequency hopping manner on the first frequency resource and the second frequency resource, and receives the first PUSCH in the non-SBFD time unit in a frequency hopping manner on the third frequency resource and the fourth frequency resource.

A type of the first PUSCH is not particularly limited in this application. For example, the first PUSCH may be a PUSCH (for example, a single slot PUSCH), a PUSCH repetition type A (PUSCH repetition type A), a PUSCH repetition type B (PUSCH repetition type B), a transport block over multi-slot (transport block over multi-slot, TBoMS) PUSCH, or a TBoMS PUSCH repetition. The type of the PUSCH is not specifically limited in embodiments of this application. The TBoMS PUSCH and the TBoMS PUSCH repetition may be jointly simplified as a TBoMS PUSCH w/ or w/o repetition.

For more detailed descriptions of the frequency hopping manner in which the terminal device sends the first PUSCH, refer to the descriptions in step S610. Details are not described herein again.

In some implementations, before step S610, the terminal device may further report a frequency hopping-related capability to the network device, so that the network device can learn whether the first information described in step S610 can be sent to the terminal device. In other words, optionally, the terminal device and the network device may further perform the following step S630.

Optionally, in S630, the terminal device sends second information to the network device. Correspondingly, the network device receives the second information from the terminal device.

The second information is used for determining that the terminal device can support at least one of the following capabilities:

a. supporting the first information including the second bit part;
b. supporting the first information including the third bit part;
c. supporting the first information including the fourth bit part;
d. supporting the first information including the second bit part and the third bit part;
e. supporting the first information including the second bit part, the third bit part, and the fourth bit part; and
f. supporting determining the number of bits included in the first bit part based on the number of frequency units in the uplink subband.

For the capability a, for example, the terminal device may report, to the network device, whether the terminal device has the capability of supporting the first information including the second bit part. It may be understood that the second bit part indicates the first frequency spacing, in other words, a frequency hopping spacing in the SBFD time unit. For example, if the terminal device reports, to the network device, that the terminal device supports the first information including the second bit part, the network device may consider that the terminal device supports frequency hopping in the SBFD time unit, and the network device may configure the first frequency spacing set for the terminal device and send the first information including the second bit part, so that the terminal device can determine the frequency hopping spacing in the SBFD time unit based on the first frequency spacing set and the first information.

The foregoing capabilities b and c are similar to the capability a, and details are not described herein again. It may be understood that, when the terminal device supports the capability b, it may be considered that the terminal device supports frequency hopping in the non-SBFD time unit. When the terminal device supports the capability c, it may be considered that the terminal device supports different resource positions of the first frequency resource in the SBFD time unit and the third frequency resource in the non-SBFD time unit.

It may be understood that, if the terminal device does not report that the terminal device supports the first information including the second bit part, the network device may determine, based on a default configuration, that the terminal device has the capability of supporting the first information including the second bit part, or does not have the capability of supporting the first information including the second bit part. This is not particularly limited in this application.

It may be further understood that the terminal device reports that the terminal device supports the first information including the second bit part, and whether the terminal device supports the first information including the third bit part or the fourth bit part is not particularly limited. For example, the network device may consider by default that the terminal device supports the third bit part (in other words, supports frequency hopping in the non-SBFD time unit), the terminal device reports that the terminal device supports the first information including the second bit part, and the network device may determine that the terminal device supports the second bit part and the third bit part (in other words, supports frequency hopping in the SBFD time unit and the non-SBFD time unit). In other words, the network device may determine, with reference to a capability reported by the terminal device and another configuration parameter, a capability actually supported by the terminal device. This is not particularly limited in this application. For example, the terminal device reports that the terminal device supports the first information including the third bit part, and whether the terminal device supports the first information including the second bit part or the fourth bit part is not particularly limited. Details are not described herein.

For the capability d, for example, the terminal device may report, to the network device, the capability of supporting the first information including the second bit part and the third bit part. It may be understood that the second bit part indicates the first frequency spacing, in other words, the frequency hopping spacing in the SBFD time unit, and the third bit part indicates the second frequency spacing, in other words, the frequency hopping spacing in the non-SBFD time unit. For example, if the terminal device reports, to the network device, that the terminal device supports the first information including the second bit part and the third bit part, the network device may consider that the terminal device supports performing frequency hopping by using two frequency hopping patterns or two frequency hopping spacings, for example, supports frequency hopping in the SBFD time unit and in the non-SBFD time unit. The network device may configure the first frequency spacing set and the second frequency spacing set for the terminal device, and send the first information including the second bit part and the third bit part, so that the terminal device can determine the frequency hopping spacings in the SBFD time unit and the non-SBFD time unit based on the first frequency spacing set, the second frequency spacing set, and the first information.

The capability e is similar to the capability d, and details are not described herein again. It may be understood that, when the terminal device supports the capability e, it may be considered that the terminal device supports frequency hopping in the SBFD time unit and in the non-SBFD time unit, and the resource positions of the first frequency resource in the SBFD time unit and the third frequency resource in the non-SBFD time unit are different.

For the capability f, for example, if the terminal device supports parsing, for example, the first bit part defined in (3), (4), or (5), the terminal device may report, to the network device, that the terminal device supports determining the number of bits included in the first bit part based on the number of frequency units in the uplink subband. In this case, the network device may generate the first bit part based on the number of frequency units in the uplink subband. If the terminal device does not support the capability, the terminal device may report that the terminal device does not support the capability, or may not report that the terminal device supports the capability (where in this case, the network device may consider by default that the terminal device does not have the capability). Therefore, the network device does not generate the first bit part based on the number of frequency units in the uplink subband.

It may be understood that the foregoing capabilities are examples for description. The terminal device may further report another frequency hopping-related capability to the network device. This is not particularly limited in this application.

It may be understood that a manner in which the terminal device reports the capability in step S630 may be applied to a scenario of frequency hopping in the SBFD time unit and frequency hopping in the non-SBFD time unit provided in this embodiment of this application, and may be applied to a scenario in which no frequency hopping is performed or another frequency hopping manner is used. For example, in a manner in which frequency hopping is performed in the non-SBFD time unit and no frequency hopping is performed in the SBFD time unit (in this manner, the first information does not include the second bit part), the terminal device may report whether the terminal device supports the first information including the fourth bit part, or the terminal device may indicate whether the first information supports determining the number of bits included in the first bit part based on the number of frequency units in the uplink subband. This is not particularly limited in this application.

It may be understood that in step S610, the network device may generate and send the first information based on the capability of the terminal device. For example, the network device determines the following conditions.

Condition 1:

Subcondition 1: The first PUSCH is a PUSCH repetition type A or B, or a TBoMS PUSCH w/ or w/or repetition.

Subcondition 2: A single slot PUSCH, a PUSCH repetition type A or B, and/or a TBoMS PUSCH w/ or w/or repetition are/is sent only in an SBFD time unit.

Subcondition 3: A PUSCH repetition type A or B and/or a TBoMS PUSCH w/ or w/or repetition are/is sent across a non-SBFD time unit and an SBFD time unit.

Condition 2: The terminal device reports any one of the capabilities a to d to the network device.

If any one or more of the subcondition 1 to the subcondition 3 are satisfied, the condition 1 is considered to be satisfied. If both the condition 1 and the condition 2 are satisfied, the network device may generate and send the first information in the manner described in step S610. Details are not described herein again.

In some implementations, the terminal device supports two or more frequency hopping manners. For example, the terminal device may support the following two frequency hopping manners. Manner 1: Frequency hopping is performed in the frequency hopping manner described in S610 (to be specific, frequency hopping is performed separately in the SBFD time unit and in the non-SBFD time unit). Manner 2: Frequency hopping is performed in the non-SBFD time unit, and frequency hopping is not performed in the SBFD time unit. It may be understood that, for different frequency hopping manners, the network device may use different manners of indicating the frequency hopping patterns. In this scenario, the network device may further indicate a specific manner in which the terminal device performs frequency hopping, or indicate how the terminal device parses the first information.

It may be understood that the foregoing manner 1 and manner 2 are merely examples, and this is not particularly limited in this application. For example, the terminal device may further support frequency hopping in the SBFD time unit, and frequency hopping is not performed in the non-SBFD time unit.

The network device may send third information to the terminal device. The third information may indicate a specific manner in which the terminal device performs frequency hopping, or indicate how the terminal device parses the first information.

For example, the third information may indicate whether the first information includes one or more of the second bit part, the third bit part, or the fourth bit part. For example, the third information indicates that the first information includes the second bit part, the third bit part, and (optionally) the fourth bit part, and the terminal device may determine, based on the third information, the frequency hopping manner in manner 1 indicated by the first information. In this case, the terminal device may consider, based on the third information, that the first bit part is generated based on the method shown in S610, or the third information may further indicate that the first bit part is generated based on the method shown in S610. This is not particularly limited in this application.

For another example, the third information may indicate a specific frequency hopping manner (for example, the foregoing manner 1 or manner 2) in which the terminal device performs frequency hopping. For example, the third information uses one bit. When a value of the bit is 0, it indicates that the first information indicates a frequency hopping pattern corresponding to manner 1, to be specific, the first information includes the second bit part, the third bit part, and (optionally) the fourth bit part. When the value of the bit is 1, it indicates that the first information indicates a frequency hopping pattern corresponding to manner 2, to be specific, the first information does not include the third bit part or the fourth bit part. This is not particularly limited in this application.

For still another example, the third information may indicate one or more of the first frequency spacing set, the second frequency spacing set, or the third frequency spacing set. For example, if the third information indicates the first frequency spacing set and the second frequency spacing set, the terminal device may learn that the first information includes the second bit part and the third bit part; and if the third information further indicates the third frequency spacing, the terminal device may learn that the first information further includes the fourth bit part. For another example, the third information indicates a new multi-slot PUSCH transmission manner in the SBFD time unit. In this manner, frequency resources in the SBFD time unit and in the non-SBFD time unit are different. In this case, the terminal device may learn that the first information further includes the fourth bit part. This is not particularly limited in this application.

According to this technical solution, the terminal device may determine the resource position of the first frequency resource based on the first bit part, and determine the resource position of the second frequency resource based on the first bit part and the second bit part, to determine the frequency hopping pattern in the SBFD time unit. The terminal device may determine the resource position of the third frequency resource based on the first frequency resource, and determine the frequency hopping pattern in the non-SBFD time unit based on the resource position of the third frequency resource and the third bit part. In other words, the network device may use a limited number of bits to indicate two frequency hopping patterns, and the frequency spacing for frequency hopping in the SBFD time unit and the frequency spacing for frequency hopping in the non-SBFD time unit may be indicated by using the second bit part and the third bit part respectively. This can improve flexibility of frequency hopping, and reduce bit consumption for indicating the frequency hopping patterns.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It may be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not intended to limit the scope of embodiments of this application.

For example, different information is differentiated.

It may be understood that, in various embodiments of this application, an "indication" may include a direct indication and an indirect indication, or may include an explicit indication and an implicit indication. Information indicated by a piece of information (for example, the foregoing first information) is referred to as to-be-indicated information. In a specific implementation process, the to-be-indicated information may be indicated in a plurality of manners. For example, but not limited to, the to-be-indicated information such as the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or pre-agreed on. For example, specific information may alternatively be indicated by using an arrangement sequence of each piece of information that is pre-agreed on (for example, stipulated in a protocol), to reduce indication overheads to some extent.

It should be understood that, in various embodiments of this application, "preconfiguration" may be implemented by pre-storing corresponding code or a corresponding table in a device (for example, a first terminal device), or in another manner that may indicate related information. A specific implementation of the "preconfiguration" is not limited in this application.

It may be understood that "transmission" is mentioned in some of the foregoing embodiments, and unless otherwise specified, transmission includes receiving and/or sending. For example, transmitting a signal may include receiving a signal and/or sending a signal.

It may be understood that, in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It may be understood that the formulas used in embodiments of this application are merely examples for description and do not limit the protection scope of embodiments of this application. In a process of calculating the foregoing related parameters, calculation may be performed based on the foregoing formulas, or calculation may be performed based on variations of the foregoing formulas, or calculation may be performed in another manner, to satisfy calculation results of the formulas.

It may be understood that some optional features in embodiments of this application may be independent of other features in some scenarios, or may be combined with other features in some scenarios. This is not limited.

It may be understood that the solutions in embodiments of this application may be appropriately combined for use, and explanations or descriptions of terms in embodiments may be mutually referenced or explained in embodiments. This is not limited.

It may be further understood that, in the foregoing method embodiments, the method and operation implemented by the terminal device may alternatively be implemented by a component (for example, a chip or a circuit) of the terminal device. In addition, the method and operation implemented by the network device may alternatively be implemented by a component (for example, a chip or a circuit) of the network device. This is not limited.

In correspondence to the methods provided in the foregoing method embodiments, embodiments of this application further provide corresponding apparatuses. The apparatus includes corresponding modules configured to perform the foregoing method embodiments. The module may be software, hardware, or a combination of the software and the hardware. It may be understood that the technical features described in the method embodiments are also applicable to the following apparatus embodiments.

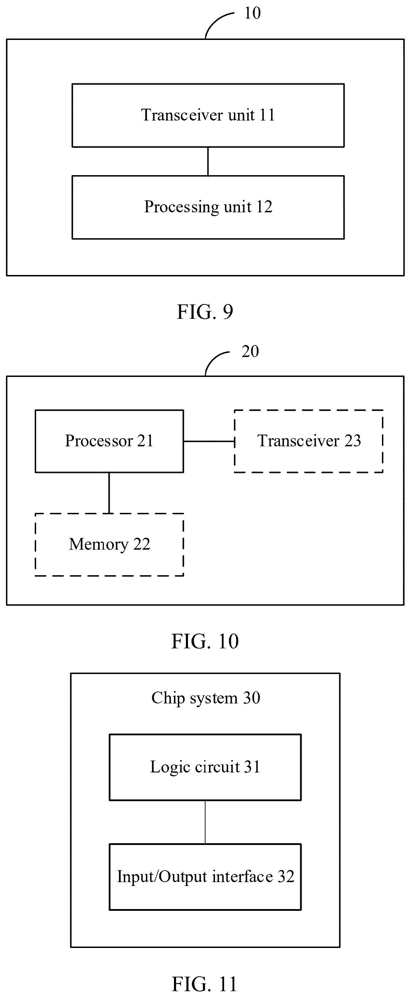

For example, FIG. 9 is a diagram of a communication apparatus 10 according to an embodiment of this application. The apparatus 10 includes a transceiver unit 11 and a processing unit 12. The transceiver unit 11 may be configured to implement a corresponding communication function. The transceiver unit 11 may also be referred to as a communication interface or a communication unit. The processing unit 12 may be configured to perform data or information processing.

Optionally, the apparatus 10 further includes a storage unit. The storage unit may be configured to store instructions and/or data. The processing unit 12 may read the instructions and/or the data in the storage unit, to cause the apparatus to implement the foregoing method embodiments.

In a possible design, the apparatus 10 may be configured to perform actions performed by the terminal device in the foregoing method embodiments. In this case, the apparatus 10 may be the terminal device or a component of the terminal device. The transceiver unit 11 is configured to perform sending and receiving-related operations on a terminal device side in the foregoing method embodiments. The processing unit 12 is configured to perform processing-related operations on a terminal device side in the foregoing method embodiments.

In a first possible implementation, the transceiver unit 11 is configured to receive first information, where the first information includes a first bit part, a second bit part, and a third bit part, where the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits included in the first bit part, the second bit part, and the third bit part is less than or equal to a first threshold; and the processing unit 12 is configured to, based on the first information, send a first physical uplink shared channel PUSCH in a subband full duplex SBFD time unit in a frequency hopping manner on the first frequency resource and the second frequency resource, and send the first PUSCH in a non-SBFD time unit in a frequency hopping manner on the third frequency resource and the fourth frequency resource.

The apparatus 10 may implement steps or procedures performed by the terminal device in the method embodiments according to embodiments of this application. The apparatus 10 may include units configured to perform the methods performed by the terminal device in the method embodiments according to embodiments of this application. A specific process in which the units perform the foregoing corresponding steps is described in detail in the foregoing method embodiments. For brevity, details are not described herein again.

In another possible design, the apparatus 10 may be configured to perform actions performed by the network device in the foregoing method embodiments. In this case, the apparatus 10 may be the network device or a component of the network device. The transceiver unit 11 is configured to perform sending and receiving-related operations on a network device side in the foregoing method embodiments. The processing unit 12 is configured to perform processing-related operations on a network device side in the foregoing method embodiments.

In a first possible implementation, the processing unit 12 is configured to send first information, where the first information includes a first bit part, a second bit part, and a third bit part, where the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits included in the first bit part, the second bit part, and the third bit part is less than or equal to a first threshold; and the transceiver unit 11 is configured to receive a first physical uplink shared channel PUSCH in a subband full duplex SBFD time unit in a frequency hopping manner on the first frequency resource and the second frequency resource, and receive the first PUSCH in a non-SBFD time unit in a frequency hopping manner on the third frequency resource and the fourth frequency resource.

The apparatus 10 may implement steps or procedures performed by the network device in the method embodiments according to embodiments of this application. The apparatus 10 may include units configured to perform the methods performed by the network device in the method embodiments according to embodiments of this application. A specific process in which the units perform the foregoing corresponding steps is described in detail in the foregoing method embodiments. For brevity, details are not described herein again.

It should be understood that the apparatus 10 herein is embodied in a form of a functional unit. The term "unit" herein may be an application specific integrated circuit (application specific integrated circuit, ASIC), an electronic circuit, a processor configured to execute at least one software or firmware program (for example, a shared processor, a dedicated processor, or a packet processor), a memory, a combinational logic circuit, and/or another appropriate component supporting the described functions. In an optional example, a person skilled in the art may understand that the apparatus 10 may be specifically the terminal device in the foregoing embodiments, and may be configured to perform procedures and/or steps corresponding to the terminal device in the foregoing method embodiments; or the apparatus 10 may be specifically the network device in the foregoing embodiments, and may be configured to perform procedures and/or steps corresponding to the network device in the foregoing method embodiments. To avoid repetition, details are not described herein again.

The apparatus 10 in each of the foregoing solutions has functions of implementing corresponding steps performed by the communication device (for example, the terminal device or the network device) in the foregoing methods. The functions may be implemented by hardware, or may be implemented by hardware executing corresponding software. The hardware or the software includes at least one module corresponding to the foregoing functions. For example, the transceiver unit may be replaced with a transceiver machine (where for example, a sending unit in the transceiver unit may be replaced with a transmitter machine, and a receiving unit in the transceiver unit may be replaced with a receiver machine), and another unit, for example, the processing unit, may be replaced with a processor, to respectively perform sending and receiving operations and processing-related operations in the method embodiments.

In addition, the transceiver unit 11 may alternatively be a transceiver circuit (for example, may include a receiver circuit and a transmitter circuit), and the processing unit may be a processing circuit.

It should be noted that the apparatus in FIG. 9 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit that is integrated on the chip. This is not limited herein.

For example, FIG. 10 is a diagram of another communication apparatus 20 according to an embodiment of this application. The apparatus 20 includes a processor 21, and the processor 21 is coupled to a memory 22. Optionally, the apparatus 20 further includes the memory 22. The memory 22 is configured to store a computer program or instructions and/or data. The processor 21 is configured to execute the computer program or the instructions stored in the memory 22, or read the data stored in the memory 22, to perform the method in the foregoing method embodiments.

Optionally, there is at least one processor 21.

Optionally, there is at least one memory 22.

Optionally, the memory 22 and the processor 21 are integrated together or disposed separately.

Optionally, as shown in FIG. 10, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement operations performed by the terminal device in the foregoing method embodiments.

For example, the processor 21 is configured to execute the computer program or the instructions stored in the memory 22, to implement related operations performed by the terminal device in the foregoing method embodiments, for example, the method performed by the terminal device in the embodiment shown in FIG. 3.

In another solution, the apparatus 20 is configured to implement operations performed by the network device in the foregoing method embodiments.

For example, the processor 21 is configured to execute the computer program or instructions stored in the memory 22, to implement related operations performed by the network device in the foregoing method embodiments, for example, the method performed by the network device in the embodiment shown in FIG. 3.

It should be understood that the processor mentioned in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, a memory (storage module) may be integrated into the processor.

It should be further noted that the memory described herein is intended to include, but is not limited to, these and any other appropriate type of memory.

For example, FIG. 11 is a diagram of a chip system 30 according to an embodiment of this application. The chip system 30 (also referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

Specifically, for example, if the chip system 30 is installed in a terminal device, the logic circuit 31 is coupled to the input/output interface 32, and the input/output interface 32 may input a wake-up signal to the logic circuit 31 for processing.

In a solution, the chip system 30 is configured to implement operations performed by the terminal device in the foregoing method embodiments.

For example, the logic circuit 31 is configured to implement processing-related operations performed by the terminal device in the foregoing method embodiments, for example, a processing-related operation performed by the terminal device in the embodiment shown in FIG. 3. The input/output interface 32 is configured to implement sending and/or receiving-related operations performed by the terminal device in the foregoing method embodiments, for example, a sending and/or receiving-related operation performed by the terminal device in the embodiment shown in FIG. 3.

In another solution, the chip system 30 is configured to implement operations performed by the network device in the foregoing method embodiments.

For example, the logic circuit 31 is configured to implement processing-related operations performed by the network device in the foregoing method embodiments, for example, a processing-related operation performed by the network device in the embodiment shown in FIG. 3. The input/output interface 32 is configured to implement sending and/or receiving-related operations performed by the network device in the foregoing method embodiments, for example, a sending and/or receiving-related operation performed by the network device in the embodiment shown in FIG. 3.

An embodiment of this application further provides a computer-readable storage medium. The computer-readable storage medium stores computer instructions for implementing the method performed by a device in the foregoing method embodiments.

For example, when the computer program is executed by a computer, the computer is caused to implement the method performed by the terminal device in the foregoing method embodiments.

For another example, when the computer program is executed by a computer, the computer is caused to implement the method performed by the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device and the network device in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the apparatus embodiments described above are merely examples. For example, division into the units is merely logical function division, and another division manner may be used in an actual implementation. For example, at least two units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement the embodiments, all or a part of the embodiments may be implemented in a form of a computer program product. The computer program product includes at least one computer instruction. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating at least one usable medium. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the foregoing usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

receiving first information, wherein the first information comprises a first bit part, a second bit part, and a third bit part, wherein the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits comprised in the first bit part, the second bit part, and the third bit part is less than or equal to a first threshold; and

based on the first information, sending a first physical uplink shared channel PUSCH in a subband full duplex SBFD time unit in a frequency hopping manner on the first frequency resource and the second frequency resource, and sending the first PUSCH in a non-SBFD time unit in a frequency hopping manner on the third frequency resource and the fourth frequency resource.

2. The method according to claim 1, wherein the first threshold is determined based on a number of frequency units in an uplink bandwidth part BWP, and the third frequency resource and the fourth frequency resource are frequency resources in the uplink BWP.

3. The method according to claim 1 or 2, wherein the first threshold L satisfies:

$$\mathrm{L} = \lceil log_2(N^{UL,BWP}(N^{UL,BWP} + 1)/2)\rceil,$$

wherein
$N^{UL,BWP}$ represents the number of frequency units in the uplink BWP, $\lceil \rceil$ represents rounding up, and the third frequency resource and the fourth frequency resource are frequency resources in the uplink BWP.

4. The method according to any one of claims 1 to 3, wherein the first information further comprises a fourth bit part, and the fourth bit part indicates a third frequency spacing between the first frequency resource and the third frequency resource.

5. The method according to claim 4, wherein a sum of numbers of bits comprised in the first bit part, the second bit part, the third bit part, and the fourth bit part is less than or equal to the first threshold.

6. The method according to any one of claims 1 to 5, wherein a sum of the number of bits comprised in the first bit part and the number of bits comprised in the second bit part is determined based on a number of frequency units in an uplink subband, and the first frequency resource and the second frequency resource are frequency resources in the uplink subband.

7. The method according to any one of claims 1 to 6, wherein the sum of the number $N_1$ of bits comprised in the first bit part and the number $N_2$ of bits comprised in the second bit part satisfies:

$$N_1 + N_2 = \lceil log_2(N^{UL,subband}(N^{UL,subband} + 1)/2)\rceil,$$

wherein
$N^{UL,subband}$ represents the number of frequency units in the uplink subband, $\lceil \rceil$ represents rounding up, and the first frequency resource and the second frequency resource are frequency resources in the uplink subband.

8. The method according to any one of claims 1 to 7, wherein the first bit part indicates a start frequency unit in the first frequency resource and a number of frequency units in the first frequency resource.

9. The method according to any one of claims 1 to 8, wherein the first frequency resource, the second frequency resource, the third frequency resource, and the fourth frequency resource have a same number of frequency units.

10. The method according to any one of claims 1 to 9, wherein the method further comprises:
sending second information, wherein the second information is used for determining that a terminal device can support at least one of the following capabilities:

supporting the first information comprising the second bit part;
supporting the first information comprising the third bit part;
supporting the first information comprising the fourth bit part, wherein the fourth bit part indicates the third frequency spacing between the first frequency resource and the third frequency resource;
supporting the first information comprising the second bit part and the third bit part;
supporting the first information comprising the second bit part, the third bit part, and the fourth bit part; and
supporting determining the number of bits comprised in the first bit part based on the number of frequency units in the uplink subband.

11. A communication method, wherein the method comprises:

sending first information, wherein the first information comprises a first bit part, a second bit part, and a third bit part, wherein the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits comprised in the first bit part, the second bit part, and the third bit part is less than or equal to a first threshold; and
receiving a first physical uplink shared channel PUSCH in a subband full duplex SBFD time unit in a frequency hopping manner on the first frequency resource and the second frequency resource, and receiving the first PUSCH in a non-SBFD time unit in a frequency hopping manner on the third frequency resource and the fourth frequency resource.

12. The method according to claim 11, wherein the first threshold is determined based on a number of frequency units in an uplink bandwidth part BWP, and the third frequency resource and the fourth frequency resource are frequency resources in the uplink BWP.

13. The method according to claim 11 or 12, wherein the first threshold L satisfies:

$$\mathrm{L} = \lceil log_2(N^{UL,BWP}(N^{UL,BWP} + 1)/2)\rceil,$$

wherein
$N^{UL,BWP}$ represents the number of frequency units in the uplink BWP, $\lceil \ \rceil$ represents rounding up, and the third frequency resource and the fourth frequency resource are frequency resources in the uplink BWP.

14. The method according to any one of claims 11 to 13, wherein the first information further comprises a fourth bit part, and the fourth bit part indicates a third frequency spacing between the first frequency resource and the third frequency resource.

15. The method according to claim 14, wherein a sum of numbers of bits comprised in the first bit part, the second bit part, the third bit part, and the fourth bit part is less than or equal to the first threshold.

16. The method according to any one of claims 11 to 15, wherein a sum of the number of bits comprised in the first bit part and the number of bits comprised in the second bit part is determined based on a number of frequency units in an uplink subband, and the first frequency resource and the second frequency resource are frequency resources in the uplink subband.

17. The method according to any one of claims 11 to 16, wherein the number $N_1$ of bits comprised in the first bit part and the number $N_2$ of bits comprised in the second bit part satisfies:

$$N_1 + N_2 = \lceil log_2(N^{UL,subband}(N^{UL,subband} + 1)/2)\rceil,$$

wherein
$N^{UL,subband}$ represents the number of frequency units in the uplink subband, $\lceil \ \rceil$ represents rounding up, and the first frequency resource and the second frequency resource are frequency resources in the uplink subband.

18. The method according to any one of claims 11 to 17, wherein the first bit part indicates a start frequency unit in the first frequency resource and a number of frequency units in the first frequency resource.

19. The method according to any one of claims 11 to 18, wherein the first frequency resource, the second frequency resource, the third frequency resource, and the fourth frequency resource have a same number of frequency units.

**20.** The method according to any one of claims 11 to 19, wherein the method further comprises:
receiving second information, wherein the second information is used for determining that a terminal device can support at least one of the following capabilities:

supporting the first information comprising the second bit part;
supporting the first information comprising the third bit part;
supporting the first information comprising the fourth bit part, wherein the fourth bit part indicates the third frequency spacing between the first frequency resource and the third frequency resource;
supporting the first information comprising the second bit part and the third bit part;
supporting the first information comprising the second bit part, the third bit part, and the fourth bit part; and
supporting determining the number of bits comprised in the first bit part based on the number of frequency units in the uplink subband.

**21.** A communication apparatus, wherein the apparatus comprises a transceiver unit and a processing unit, wherein

the transceiver unit is configured to receive first information, wherein the first information comprises a first bit part, a second bit part, and a third bit part, wherein the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits comprised in the first bit part, the second bit part, and the third bit part is less than or equal to a first threshold; and
the processing unit is configured to, based on the first information, send a first physical uplink shared channel PUSCH in a subband full duplex SBFD time unit in a frequency hopping manner on the first frequency resource and the second frequency resource, and send the first PUSCH in a non-SBFD time unit in a frequency hopping manner on the third frequency resource and the fourth frequency resource.

**22.** A communication apparatus, wherein the apparatus comprises a transceiver unit and a processing unit, wherein

the transceiver unit is configured to send first information, wherein the first information comprises a first bit part, a second bit part, and a third bit part, wherein the first bit part indicates a first frequency resource, the second bit part indicates a first frequency spacing between the first frequency resource and a second frequency resource, the third bit part indicates a second frequency spacing between a third frequency resource and a fourth frequency resource, the third frequency resource is determined based on the first frequency resource, and a sum of numbers of bits comprised in the first bit part, the second bit part, and the third bit part is less than or equal to a first threshold; and
the processing unit is configured to receive a first physical uplink shared channel PUSCH in a subband full duplex SBFD time unit in a frequency hopping manner on the first frequency resource and the second frequency resource, and receiving the first PUSCH in a non-SBFD time unit in a frequency hopping manner on the third frequency resource and the fourth frequency resource.

**23.** A communication apparatus, comprising a module or a unit configured to perform the method according to any one of claims 1 to 10, or comprising a module or a unit configured to perform the method according to any one of claims 11 to 20.

**24.** A computer-readable storage medium, wherein the computer-readable storage medium stores a computer program, and when the computer program is run on a computer, the computer is caused to perform the method according to any one of claims 1 to 10, or the computer is caused to perform the method according to any one of claims 11 to 20.

**25.** A chip, comprising a processor, wherein the processor is coupled to a memory, the memory is configured to store a computer program, and the processor is configured to execute the computer program stored in the memory to implement the method according to any one of claims 1 to 10, or the processor is configured to execute the computer program stored in the memory to implement the method according to any one of claims 11 to 20.

**26.** A communication apparatus, comprising a processor, configured to execute a computer program stored in a memory, to cause the apparatus to perform the method according to any one of claims 1 to 10, or cause the apparatus to perform the method according to any one of claims 11 to 20.

**27.** The apparatus according to claim 26, wherein the apparatus further comprises the memory.

FIG. 1

Non-SBFD symbol #1    Non-SBFD symbol #2

Uplink
subband

Frequency
domain

Time
domain

SBFD symbol

Uplink
BWP

Time-frequency resource used
for uplink transmission

Time-frequency resource used
for downlink transmission

FIG. 2

X        X        X        X        X

FIG. 3

FIG. 4

FIG. 5

FIG. 6

FIG. 7

FIG. 8

10

Transceiver unit 11

Processing unit 12

FIG. 9

20

Processor 21

Transceiver 23

Memory 22

FIG. 10

Chip system 30

Logic circuit 31

Input/Output interface 32

FIG. 11

## INTERNATIONAL SEARCH REPORT

| International application No. |
|---|
| **PCT/CN2024/111012** |

| A. | CLASSIFICATION OF SUBJECT MATTER |
|---|---|

H04L5/14(2006.01)i; H04B1/713(2011.01)i

According to International Patent Classification (IPC) or to both national classification and IPC

| B. | FIELDS SEARCHED |
|---|---|

Minimum documentation searched (classification system followed by classification symbols)

IPC: H04L H04B H04W

Documentation searched other than minimum documentation to the extent that such documents are included in the fields searched

Electronic data base consulted during the international search (name of data base and, where practicable, search terms used)

CNTXT, ENTXT, ENTXTC, CNKI, DWPI, WPABS, 3GPP: 子带全双工, SBFD, Sub-band non-overlapping full duplex, Subband non-overlapping full duplex, Sub-band full duplex, Subband full duplex, 跳频, FH, frequency hopping, 图案, 模式, 方式, 方案, pattern, mode, scheme, 间隔, 偏移, offset, 上行, 时隙, 符号, 时间单元, UL, uplink, timeslot, slot, symbol, non-SBFD, 非SBFD, UL_only, 指示, 比特, 开销, 消耗, indicate, bit, overhead

| C. | DOCUMENTS CONSIDERED TO BE RELEVANT |
|---|---|

| Category* | Citation of document, with indication, where appropriate, of the relevant passages | Relevant to claim No. |
|---|---|---|
| A | HUAWEI et al. "R1-2304647, Discussion on Potential Enhancement on Subband Non-overlapping Full Duplex" <br> *3GPP TSG-RAN WG1 Meeting #113*, 26 May 2023 (2023-05-26), <br> section 2.3.3 | 1-27 |
| A | ERICSSON. "R1-2207462, Sub-band Non-overlapping Full Duplex" <br> *3GPP TSG-RAN WG1 Meeting #110*, 26 August 2022 (2022-08-26), <br> entire document | 1-27 |
| A | CATT. "R1-2302702, Discussion on Subband Non-overlapping Full Duplex" <br> *3GPP TSG RAN WG1 #112bis-e*, 26 April 2023 (2023-04-26), <br> entire document | 1-27 |
| A | CN 115395999 A (CHINA TELECOM CORP., LTD.) 25 November 2022 (2022-11-25) <br> entire document | 1-27 |
| A | US 2023239122 A1 (INTEL CORP.) 27 July 2023 (2023-07-27) <br> entire document | 1-27 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| **16 October 2024** | **22 October 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2024/111012**

| Patent document cited in search report | | | Publication date (day/month/year) | Patent family member(s) | Publication date (day/month/year) |
|---|---|---|---|---|---|
| CN | 115395999 | A | 25 November 2022 | None | |
| US | 2023239122 | A1 | 27 July 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311021897